# EUROPEAN PATENT SPECIFICATION

(11) **EP 3 919 391 B1**
(45) Date of publication and mention of the grant of the patent: **27.03.2024**
(21) Application number: 19913258.0
(22) Date of filing: 04.04.2019
(51) Int. Cl.: B64G 1/10, B64G 1/24, B64G 3/00, B64G 1/40

(54) **ARTIFICIAL SATELLITE AND MONITORING SYSTEM**
KÜNSTLICHER SATELLIT UND ÜBERWACHUNGSSYSTEM
SATELLITE ARTIFICIEL ET SYSTÈME DE SURVEILLANCE

(30) Priority: 28.01.2019 WO PCT/JP2019/002747
(43) Date of publication of application: 08.12.2021
(73) Proprietor: MITSUBISHI ELECTRIC CORPORATION, Chiyoda-ku Tokyo 100-8310 (JP)
(72) Inventor: MUKAE, Hisayuki, Tokyo 100-8310 (JP)
(74) Representative: Mewburn Ellis LLP
(86) International application number: PCT/JP2019/014988
(87) International publication number: WO 2020/158000

(56) References cited:
- EP-A2- 0 992 764
- WO-A1-2012/040828
- JP-A- H06 179 399
- JP-A- 2000 111 359
- JP-A- 2008 236 156
- JP-A- 2013 540 639
- JP-A- 2014 141 108
- JP-A- 2017 161 339
- JP-A- 2017 161 339
- RU-C1- 2 670 081
- US-A1- 2017 247 123
- US-A1- 2017 247 124
- US-A1- 2018 186 477
- US-B1- 10 059 470

## Description

### Technical Field

The present invention relates to a system for monitoring Earth from space.

### Background Art

An orbit of an artificial satellite is affected by an elliptic effect of Earth (an Earth flattening effect), asymmetry with respect to an equatorial surface of the Earth, and high-order components compared to calculating the Earth as a mass point without a volume. For this reason, an effect such as an orbit surface circling with respect to an inertial space, or the like is generated.

An artificial satellite (geostationary orbit satellite) that circulates on a geostationary orbit flies about 36,000 kilometers above the equator and circulates around the Earth in about a day while synchronizing with a rotation of the Earth. For this reason, the geostationary orbit satellite appears to be stationary in the sky when viewed from a specific point on a ground. That is, it is possible to always monitor the specific point by a monitoring means installed on the geostationary orbit satellite.

Since geostationary orbit satellite flies about 36,000 kilometers above the equator, monitoring by the geostationary orbit satellite is to be monitoring from a long distance. Further, when monitoring a mid-latitude (for example, near 35 degrees north latitude), monitoring by the geostationary orbit satellite is to be monitoring by viewing from an angle. For this reason, it is difficult to make the monitoring by the geostationary orbit satellite into one with high resolution.

The geostationary orbit satellite has traditionally been put into the geostationary orbit by chemical propulsion. For this reason, it is necessary to install a large amount of propellant on the geostationary orbit satellite, and it has been difficult to install a photographing means having a large aperture and a long focal length on the geostationary orbit satellite.

The chemical propulsion or the electric propulsion is utilized as a propulsion means for an artificial satellite.

For example, in an artificial satellite called a super-low altitude demonstrator, the electric propulsion is utilized. The super-low altitude demonstrator maintains an orbit altitude (about 200 kilometers) where atmospheric resistance cannot be ignored, by accelerating by the electric propulsion, and obtains an effect of monitoring with high resolution.

The super-low altitude demonstrator does not have synchronization with the rotation of the Earth like the geostationary orbit satellite. For this reason, it is impossible to always monitor the specific point by monitoring with the super-low altitude demonstrator.

Patent Literature 1 discloses a system for observing an observation goal area in a short time, after making an observation plan, by using a plurality of observation satellite groups.

The system disclosed in Patent Literature 1 requires a plurality of observation satellite groups. For this reason, a construction cost of a system is high.

The system disclosed in RU2670081C1 involves the transfer of a satellite from a multiple geosynchronous orbit to a near-high-resolution coplanar quasi-synchronous orbit. The system disclosed in WO2012/040828A1 involves satellites with orbital planes and eccentricities chosen to optimize coverage of particular service area located at high latitudes.

### Citation List

### Patent Literature

Patent Literature 1: JP2008-126876A

### Summary of Invention

### Technical Problem

The present invention aims to monitor a target area of Earth from space with high resolution.

### Solution to Problem

The technical problem is solved by an artificial satellite according to claim 1, and a monitoring system according to claim 13.

### Advantageous Effects of Invention

According to the present invention, it is possible to monitor a target area of Earth from space with high resolution.

### Brief Description of Drawings

Fig. 1 is a configuration diagram of a monitoring system 100 according to a first embodiment;
Fig. 2 is a diagram illustrating a circulation orbit 122 according to the first embodiment;
Fig. 3 is a diagram illustrating a circulation orbit 122 according to a second embodiment;
Fig. 4 is a diagram illustrating a circulation orbit 122 according to a third embodiment;
Fig. 5 is a configuration diagram of a monitoring system 100 according to a fifth embodiment;
Fig. 6 is a relationship diagram between Earth 120, a circulation orbit 122, and the sun 123 according to the fifth embodiment;
Fig. 7 is a diagram illustrating an arrangement example of a plurality of orbit surfaces according to the fifth embodiment;
Fig. 8 is a diagram illustrating an arrangement example of the plurality of orbit surfaces according to the fifth embodiment;
Fig. 9 is a diagram illustrating a perigee of a circulation orbit 122 according to a sixth embodiment;
Fig. 10 is a diagram illustrating a perigee of a circulation orbit 122 according to a seventh embodiment;
Fig. 11 is a diagram illustrating monitoring (side-look) of a target area 121 according to an eighth embodiment;
Fig. 12 is a diagram illustrating four circular orbits according to a tenth embodiment;
Fig. 13 is a diagram illustrating an orbit (2) according to the tenth embodiment;
Fig. 14 is a diagram illustrating an orbit (3) according to the tenth embodiment;
Fig. 15 is a diagram illustrating an orbit (4) according to the tenth embodiment;
Fig. 16 is a diagram illustrating the orbit (4) according to the tenth embodiment;
Fig. 17 is a relationship diagram between Earth 120, a circulation orbit 122, and the sun 123 according to an eleventh embodiment;
Fig. 18 is a diagram illustrating a sun-synchronous orbit (eight rounds/day) according to the eleventh embodiment;
Fig. 19 is a diagram illustrating a sun-synchronous orbit (seven rounds/day) according to the eleventh embodiment;
Fig. 20 is a diagram illustrating a sun-synchronous orbit (nine rounds/day) according to the eleventh embodiment;
Fig. 21 is a diagram illustrating a sun-synchronous orbit (nine rounds/day) according to the eleventh embodiment;
Fig. 22 is a diagram illustrating a sun-synchronous orbit (ten rounds/day) according to the eleventh embodiment;
Fig. 23 is a diagram illustrating a sun-synchronous orbit (ten rounds/day) according to the eleventh embodiment;
Fig. 24 is a diagram illustrating a sun-synchronous orbit (eleven rounds/day) according to the eleventh embodiment;
Fig. 25 is a diagram illustrating a sun-synchronous orbit (eleven rounds/day) according to the eleventh embodiment;
Fig. 26 is a diagram illustrating various types of sun-synchronous orbits according to a thirteenth embodiment;
Fig. 27 is a diagram illustrating a sun-synchronous orbit (four rounds/day) on a map according to the thirteenth embodiment;
Fig. 28 is a diagram illustrating a sun-synchronous orbit (four rounds/day) on a map according to the thirteenth embodiment;
Fig. 29 is a diagram illustrating a sun-synchronous orbit (three rounds/day) on a map according to the thirteenth embodiment;
Fig. 30 is a diagram illustrating a sun-synchronous orbit (three rounds/day) on a map according to the thirteenth embodiment;
Fig. 31 is a diagram illustrating a sun-synchronous orbit (two rounds/day) on a map according to the thirteenth embodiment; and
Fig. 32 is a diagram illustrating a sun-synchronous orbit (two rounds/day) on a map according to the thirteenth embodiment.

### Description of Embodiments

In embodiments and the drawings, the same or corresponding elements are designated by the same reference numerals. Descriptions of the elements designated by the same reference numerals as the described elements will be omitted or simplified as appropriate.

### First Embodiment.

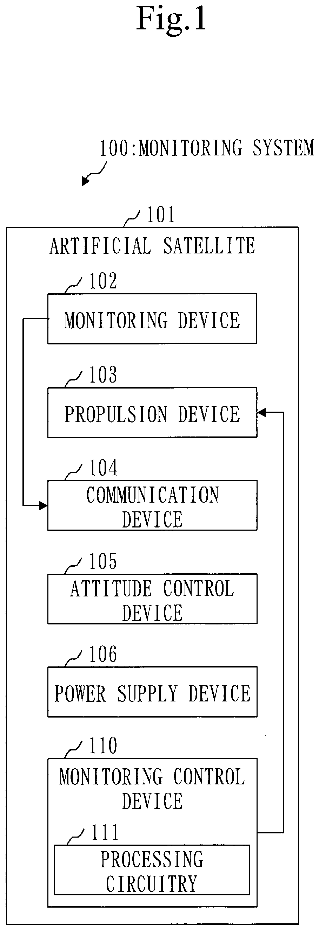

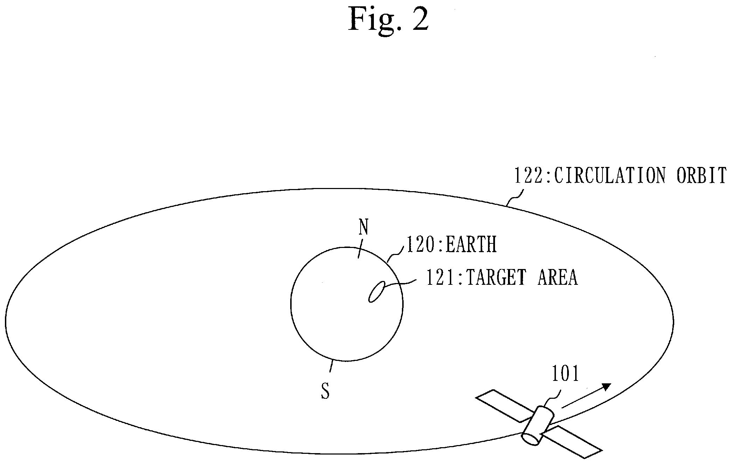

A system for monitoring a target area of Earth from space with high resolution will be described with reference to Figs. 1 and 2.

### *** Description of Configuration ***

A configuration of a monitoring system 100 will be described with reference to Fig. 1.

The monitoring system 100 is a system for monitoring the target area of the Earth from space with high resolution.

The monitoring system 100 is realized by an artificial satellite 101. The number of artificial satellites 101 may be plural.

The artificial satellite 101 includes a monitoring device 102, a propulsion device 103, a communication device 104, an attitude control device 105, a power supply device 106, and the like. That is, the monitoring device 102, the propulsion device 103, the communication device 104, the attitude control device 105, the power supply device 106, and the like are installed on the artificial satellite 101.

The monitoring device 102 is a device for monitoring the target area of the Earth. Specifically, the monitoring device 102 is a visible optical sensor or an infrared optical sensor. However, the monitoring device 102 may be a synthetic aperture radar (SAR) or another device. "Monitoring" may be read as "observing".

The propulsion device 103 is a device for changing speed of the artificial satellite 101. Specifically, the propulsion device 103 is an electric propulsion machine. For example, the propulsion device 103 is an ion engine or a Hall thruster.

The communication device 104 is a device for communicating monitoring data or the like. The monitoring data is data obtained by the monitoring performed by the monitoring device 102. The monitoring data is equivalent to an image where the target area appears.

The attitude control device 105 is a device for controlling attitude elements such as an attitude of the artificial satellite 101, an angular speed of the artificial satellite 101, and a line-of-sight direction (Line Of Sight) of the monitoring device 102. The attitude control device 105 changes each attitude element in a desired direction. Alternatively, the attitude control device 105 maintains each attitude element in the desired direction. The attitude control device 105 includes an attitude sensor, an actuator, and a controller. For example, the attitude sensor is a gyroscope, an Earth sensor, a sun sensor, a star tracker, a thruster, a magnetic sensor, or the like. For example, the actuator is an attitude control thruster, a momentum wheel, a reaction wheel, a control moment gyro, or the like. For example, the controller controls the actuator by executing a control program based on measurement data of the attitude sensor or a control command from the Earth.

The power supply device 106 includes a solar cell, a battery, a power control device, and the like, and supplies power to each equipment installed on the artificial satellite 101.

The artificial satellite 101 further includes a monitoring control device 110. That is, the monitoring control device 110 is installed on the artificial satellite 101.

The monitoring control device 110 is a device that controls the propulsion device 103 in such a manner that the monitoring device 102 can monitor the target area with high resolution for as long as possible. For example, the monitoring control device 110 is a computer.

The monitoring control device 110 includes a processing circuitry 111.

The processing circuitry 111 may be dedicated hardware or a processor that executes a program stored in a memory. The processing circuitry 111 functions as a monitoring control unit that controls the propulsion device 103.

In the processing circuitry 111, a part of functions may be realized by dedicated hardware, and the remaining functions may be realized by software or firmware. That is, the processing circuitry 111 can be realized by hardware, software, firmware, or a combination of these.

Dedicated hardware is, for example, a single circuit, a composite circuit, a programmed processor, a parallel programmed processor, an ASIC, an FPGA, or a combination of these.

ASIC is an abbreviation for Application Specific Integrated Circuit.

FPGA is an abbreviation for Field Programmable Gate Array.

### *** Description of Operation ***

The operation of the monitoring control device 110 will be described with reference to Fig. 2.

The artificial satellite 101 circulates around the Earth 120. An orbit on which the artificial satellite 101 circulates around the Earth 120 is referred to as a circulation orbit 122. Specifically, the circulation orbit 122 is a geostationary orbit.

The monitoring control device 110 controls the propulsion device 103 while the artificial satellite 101 circulates around the Earth 120.

Specifically, the monitoring control device 110 instructs the propulsion device 103 to increase or decrease thrust, and the propulsion device 103 increases or decreases the thrust according to the instruction. As a result, the artificial satellite 101 accelerates or decelerates.

For example, the monitoring control device 110 inputs a decided control signal into the propulsion device 103 in a decided time zone by executing a monitoring control program. Alternatively, the monitoring control device 110 receives control data from a ground station via the communication device 104, and inputs the control signal into the propulsion device 103 according to the control data from the ground station.

The monitoring control device 110 controls an injection direction, an injection amount, injection time, and the like of propellant by the propulsion device 103.

Various types of parameters of the artificial satellite 101 are changed by the control of the monitoring control device 110. For example, parameters such as an orbit altitude, and acceleration and deceleration of the thrust are changed.

Consequently, the monitoring control device 110 realizes the following adjustments (1-1) and (1-2).
(1-1) The monitoring control device 110 adjusts a relative position of the artificial satellite 101 with respect to a target area 121 in a target time zone. For example, the target time zone is a daytime, and the target area 121 is Japan.
(1-2) A circulation cycle of the artificial satellite 101 is set to a rotation cycle of the Earth 120. A circulation cycle is a time required to circulate on the circulation orbit 122 one round.

For example, the monitoring control device 110 controls the propulsion device 103 in such a manner that the artificial satellite 101 flies during a daytime of Japan time at a position suitable for photographing Japan by the visible optical sensor. Then, the propulsion device 103 changes the speed of the artificial satellite 101 during a night time of Japan time.

The monitoring control device 110 adjusts the relative position of the artificial satellite 101 with respect to the target area 121 as follows.

For example, the monitoring control device 110 controls the propulsion device 103 in such a manner that the artificial satellite 101 decelerates before the target time zone. Consequently, the orbit altitude of the artificial satellite 101 in the target time zone lowers. The orbit altitude of the artificial satellite 101 means the altitude of the circulation orbit 122.

As the orbit altitude lowers, circulation speed of the artificial satellite 101 with respect to rotation speed of the Earth 120 increases. As a result, the artificial satellite 101 moves eastward with respect to the target area 121.

For example, the monitoring control device 110 controls the propulsion device 103 in such a manner that the artificial satellite 101 accelerates before the target time zone. Consequently, the orbit altitude of the artificial satellite 101 in the target time zone rises.

When the orbit altitude rises, the circulation speed of the artificial satellite 101 with respect to the rotation speed of the Earth 120 decreases. As a result, the artificial satellite 101 moves westward with respect to the target area 121.

That is, the monitoring control device 110 repeats raising and lowering the orbit altitude by controlling the propulsion device 103.

### *** Description of Examples ***

By installing the electric propulsion machine such as an ion engine or a Hall thruster on the artificial satellite 101, it is possible to reduce an amount of propellant as compared with a case where a chemical propulsion machine is installed. That is, an area where the propellant is installed is reduced.

For this reason, it is possible to install on the artificial satellite 101, an image machine having a large aperture and a long focal length. The image machine is used as the monitoring device 102.

When the artificial satellite 101 is decelerated by the electric propulsion machine, the orbit altitude of the artificial satellite 101 lowers, and relative speed of the artificial satellite 101 with respect to the target area 121 increases. Due to this effect, a flight position (phase) of the artificial satellite 101 in the circulation orbit 122 moves eastward.

When the artificial satellite 101 is accelerated by the electric propulsion machine, the orbit altitude of the artificial satellite 101 rises, and the relative speed of the artificial satellite 101 with respect to the target area 121 decreases. Due to this effect, the flight position (phase) of the artificial satellite 101 in the circulation orbit 122 moves westward.

The geostationary satellite depends only on natural phenomenon that drop by attraction continues permanently. On the other hand, the artificial satellite 101 can be artificially manipulated by increasing or decreasing of the speed due to the electric propulsion. For example, it is possible to artificially manipulate circling of an orbit surface, a satellite flight position (phase) on the orbit surface, and the like. The orbit surface is a circular (or elliptical) surface formed by the circulation orbit.

If the artificial satellite 101 accelerates due to the electric propulsion, the orbit altitude rises. As a result, the circling of the orbit surface becomes slow. If the circling of the orbit surface remains slow, a time required for one round is extended.

If the artificial satellite 101 decelerates due to the electric propulsion, the orbit altitude lowers. As a result, the circling of the orbit surface becomes fast. If the circling of the orbit surface remains fast, the time required for one round is shortened.

However, it is possible to maintain the time required for one round by performing acceleration and deceleration during one round.

That is, if the deceleration is performed after the acceleration, the circling of the orbit surface becomes fast after the circling of the orbit surface is delayed, and a one-round return time is maintained.

Further, if the acceleration is performed after the deceleration, the circling of the orbit surface is delayed after the circling of the orbit surface becomes fast, and the one-round return time is maintained.

If it does not have to be the one-day return, it is possible to further accelerate the circling of the orbit surface.

That is, a cycle of one round of the artificial satellite 101 may coincide with the rotation cycle of the Earth, or a cycle of a plurality of rounds of the artificial satellite 101 may coincide with the rotation cycle of the Earth.

### *** Effect of First Embodiment ***

It is possible to perform monitoring with high resolution by installing the image machine having the large aperture and the long focal length on the artificial satellite 101.

It is possible to move the artificial satellite 101 eastward or westward with respect to the target area 121. Therefore, it is possible to change the line-of-sight direction when monitoring the target area 121 positioned at a mid-latitude such as a vicinity of Japan.

By appropriately combining the acceleration and the deceleration, it is possible to run the monitoring system 100 for a long period of time while setting the circulation cycle of the artificial satellite 101 to rotation cycle of the Earth 120 on an average basis.

### Second Embodiment.

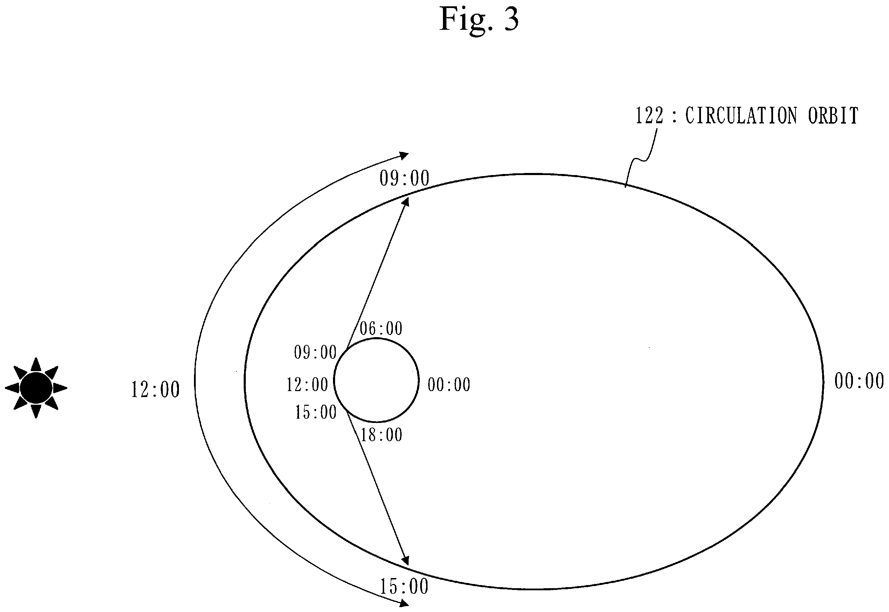

For a mode for monitoring the target area 121 for as long as possible, mainly matters different from the first embodiment will be described with reference to Fig. 3.

### *** Description of Configuration * * *

Configurations of the monitoring system 100 and the artificial satellite 101 are the same as those in the first embodiment (see Fig. 1).

### *** Description of Operation ***

The circulation orbit 122 of the artificial satellite 101 and operation of the monitoring control device 110 will be described with reference to Fig. 3.

The circulation orbit 122 is an elliptical orbit and has an eccentricity different from that of the geostationary orbit (generally circular orbit).

In the circulation orbit 122, a point nearest to the Earth 120 is referred to as a perigee. A section taking the perigee as a base point (the perigee and a vicinity of the perigee) is referred to as a perigee section.

In the circulation orbit 122, a point farthest from the Earth 120 is referred to as an apogee. A section taking the apogee as a base point (the apogee and the vicinity of the apogee) is referred to as an apogee section.

In the circulation orbit 122, the perigee is desirable to be positioned between the Earth and an inner belt of a Van Allen belt, or between the inner belt of the Van Allen belt and an outer belt of the Van Allen belt (see an embodiment 6 and an embodiment 7).

In Fig. 3, the artificial satellite 101 passes the perigee at about 12:00. The perigee section is a section where the artificial satellite 101 flies during the daytime (09:00 to 15:00). In other words, the perigee section is a section where the artificial satellite 101 flies during the target time zone.

Further, the artificial satellite 101 passes the apogee at about 00:00. The apogee section is a section where the artificial satellite 101 flies during the night time (for example, 18:00 to 06:00). In other words, the apogee section is a section where the artificial satellite 101 flies during a time zone different from the target time zone.

Each time is a time in the target area 121.

The monitoring control device 110 controls the propulsion device 103 during a period (nighttime) during which the artificial satellite 101 stays in the apogee section.

Consequently, the monitoring control device 110 realizes the following adjustment (2) in addition to the adjustments (1-1) and (1-2) described in the first embodiment.

(2) The monitoring control device 110 extends the period during which the artificial satellite 101 stays in the perigee section.

### *** Effect of Second Embodiment ***

At the perigee, a distance from the artificial satellite 101 to the target area 121 becomes shorter. Therefore, at the perigee, it is possible to make the monitoring into one with high resolution.

However, in the generally elliptical orbit, a normal line of the orbit surface circles without synchronizing with the rotation of the Earth 120. For this reason, a major axis of the circulation orbit 122 and a minor axis of the circulation orbit 122 circle in an east-west direction of the Earth 120. That is, a position of the perigee is not synchronized with the rotation of the Earth 120. As a result, a time zone during which monitoring with high resolution can be performed is limited.

However, by the monitoring control device 110 controlling the electric propulsion of the propulsion device 103, the artificial satellite 101 accelerates or decelerates. As a result, it is possible to move the position of the artificial satellite 101 on the same orbit surface eastward or westward (see the first embodiment). Further, it is possible to change the rotation speed of the normal line of the circulation orbit 122 (elliptical orbit). That is, it is possible to artificially change the circling speed of the elliptical orbit. Therefore, it is possible to lengthen the period during which the artificial satellite 101 stays near the perigee. As a result, the time during which monitoring with high resolution can be performed is extended.

Further, the monitoring control device 110 can make reverse correction to the rotation of the normal line of the circulation orbit 122 by decelerating or accelerating during an apogee staying period which is unsuitable for monitoring. Consequently, a relative relationship between the circulation of the artificial satellite 101 and the rotation of the Earth 120 is restored to an original relationship. As a result, it is possible to run the monitoring system 100 for a long period of time while setting the circulation cycle of the artificial satellite 101 to the rotation cycle of the Earth 120.

### Third Embodiment.

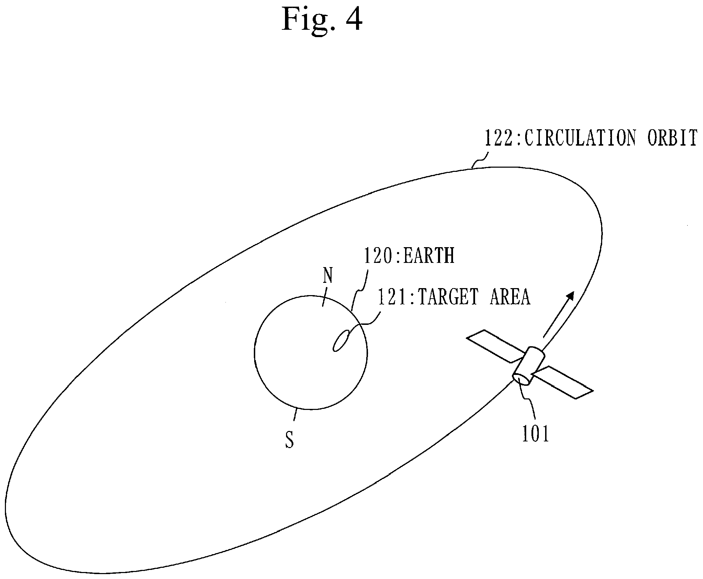

For a mode for monitoring the target area 121 with higher resolution, mainly matters different from the first embodiment will be described with reference to Fig. 4.

### *** Description of Configuration ***

Configurations of the monitoring system 100 and the artificial satellite 101 are the same as those in the first embodiment (see Fig. 1).

### *** Description of Operation ***

The circulation orbit 122 of the artificial satellite 101 and operation of the monitoring control device 110 will be described with reference to Fig. 4.

The circulation orbit 122 is an inclined orbit and has an orbit inclination angle of a size corresponding to a latitude of the target area 121.

For this reason, the artificial satellite 101 passes directly above the target area 121 which is not positioned on the equator.

The monitoring control device 110 controls the propulsion device 103 while the artificial satellite 101 circulates around the Earth 120, as with the first embodiment.

Consequently, the monitoring control device 110 realizes the adjustments (1-1) and (1-2) described in the first embodiment.

Regarding the adjustment (1-1), the monitoring control device 110 moves the artificial satellite 101 in the sky above the target area 121 (for example, directly above, at a zenith, or in a high elevation angle direction of 60 degrees or more) during the target time zone.

### *** Effect of Third Embodiment ***

When monitoring the target area 121 positioned at the mid-latitude as in Japan, the target area 121 is viewed from an angle from the geostationary orbit.

In the third embodiment, the orbit inclination angle has a size corresponding to the latitude of the target area 121. For this reason, there is a time zone during which the artificial satellite 101 stays near the zenith when viewed from the target area 121. Since the target area 121 can be viewed directly below during that time zone, it is possible to monitor with high resolution.

However, in the inclined orbit, the normal line of the orbit surface circles without synchronizing with the rotation of the Earth 120. For this reason, a longitude when the artificial satellite 101 passes the mid-latitude, circles in the east-west direction of the Earth 120. That is, a position where the artificial satellite 101 passes the zenith of the target area 121 is not synchronized with the rotation of the Earth 120. Therefore, the time zone during which monitoring with high resolution is possible is limited. Further, since the visible optical sensor monitors the target area 121 by utilizing reflection of sunlight, a condition is required that an incident angle of the sunlight is satisfactory at a mid-latitude passage timing.

In the third embodiment, by the monitoring control device 110 controlling the electric propulsion of the propulsion device 103, the artificial satellite 101 accelerates or decelerates. Consequently, an effect of moving the satellite position on the same orbit surface eastward or westward as well as an effect of changing the circling speed of the normal line of the elliptical orbit are obtained. That is, it is possible to artificially change the circling speed of the inclined orbit. For this reason, it is possible to lengthen the period during which the artificial satellite 101 stays near the zenith when viewed from the target area 121. Therefore, it is possible to extend the time during which monitoring with high resolution is possible.

Also, from the sky above the equator, a place cannot be monitored which is shielded by an undulation such as a building or a mountain.

In the third embodiment, since the target area 121 can be monitored from substantially the zenith, it is possible to monitor the shielded place by monitoring from the sky above the equator.

### Fourth Embodiment.

For a mode for monitoring the target area 121 with higher resolution for as long as possible, mainly matters different from the first to third embodiments will be described.

### *** Description of Configuration ***

Configurations of the monitoring system 100 and the artificial satellite 101 are the same as those in the first embodiment (see Fig. 1).

### *** Description of Operation ***

The circulation orbit 122 is an elliptical orbit and has an eccentricity different from that of the geostationary orbit (generally circular orbit) (as with the second embodiment).

Further, the circulation orbit 122 is an inclined orbit and has an orbit inclination angle of a size corresponding to the latitude of the target area 121 (as with the third embodiment).

The monitoring control device 110 controls the propulsion device 103 while the artificial satellite 101 circulates around the Earth 120, as with the first to third embodiments. Consequently, the adjustments (1-1) and (1-2) described in the first and third embodiments are realized.
(1-1) The monitoring control device 110 adjusts the relative position of the artificial satellite 101 with respect to the target area 121 in the target time zone. Further, the monitoring control device 110 moves the artificial satellite 101 to the sky above the target area 121 (for example, directly above, at a zenith, or in a high elevation angle direction of 60 degrees or more) during the target time zone.
(1-2) The circulation cycle of the artificial satellite 101 is set to the rotation cycle of the Earth 120.

Further, the monitoring control device 110 controls the propulsion device 103 during a period (nighttime) during which the artificial satellite 101 stays in the apogee section, as with the second embodiment. Consequently, the adjustment (2) described in the second embodiment is realized.

(2) The monitoring control device 110 extends the period during which the artificial satellite 101 stays in the perigee section.

### *** Effect of Fourth Embodiment ***

According to the fourth embodiment, it is possible to obtain an effect that the target area 121 can be monitored from a short distance (as with the second embodiment) and an effect that the target area 121 can be monitored from the zenith (as with the third embodiment).

However, in order to change the orbit inclination angle and the eccentricity in such a manner that the artificial satellite 101 can monitor the target area 121 under a satisfactory condition, the following condition must be satisfied. That is, it is necessary that the perigee is positioned near the latitude of the target area 121, the artificial satellite 101 stays near the target area 121 on the orbit surface, and the artificial satellite 101 passes near the target area 121 during a time zone (daytime) during which an incident condition of the sunlight is satisfactory.

When the target area 121 is monitored by a plurality of artificial satellites in a time-division manner in order to satisfy such a condition, a total cost of the monitoring system ends up increasing.

In the fourth embodiment, by the monitoring control device 110 controlling the electric propulsion of the propulsion device 103, the artificial satellite 101 accelerates or decelerates. That is, the circling speed of the normal line of the orbit surface is artificially accelerated or decelerated. Then, the flight position of the artificial satellite 101 on the orbit surface is artificially changed. Consequently, a time during which a satisfactory monitoring condition is maintained is extended, and always monitoring with a small number of satellites is possible.

### Fifth Embodiment.

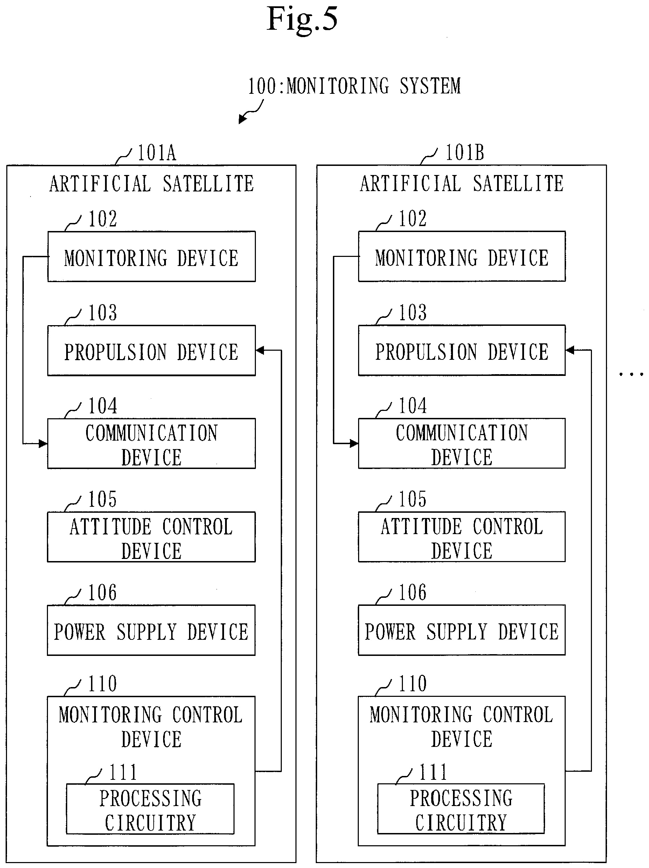

For a mode for always monitoring the target area 121 under the satisfactory monitoring condition, mainly matters different from the first to fourth embodiments will be described with reference to Figs. 5 to 8.

### *** Description of Configuration ***

A configuration of the monitoring system 100 will be described with reference to Fig. 5.

The monitoring system 100 includes a plurality of artificial satellites (101A, 101B, ...). When any of the plurality of artificial satellites (101A, 101B, ...) is not specified, each is referred to as an artificial satellite 101.

A configuration of each artificial satellite 101 is the same as the configuration in the first embodiment.

### *** Description of Operation ***

The monitoring control device 110 controls the propulsion device 103 while the artificial satellite 101 circulates around the Earth 120. Consequently, the relative position of the artificial satellite 101 with respect to the target area 121 in the target time zone is adjusted.

For example, the monitoring control device 110 controls the monitoring device 102 in such a manner that the artificial satellite 101 decelerates before the target time zone. Consequently, the orbit altitude of the artificial satellite 101 in the target time zone lowers. As the orbit altitude lowers, the circulating speed of the artificial satellite 101 with respect to the rotation speed of the Earth 120 increases. Then, the artificial satellite 101 moves eastward with respect to the target area 121.

For example, the monitoring control device 110 controls the monitoring device 102 in such a manner that the artificial satellite 101 accelerates before the target time zone. Consequently, the orbit altitude of the artificial satellite 101 in the target time zone rises. As the orbit altitude rises, the circulation speed of the artificial satellite 101 with respect to the rotation speed of the Earth 120 decreases. Then, the artificial satellite 101 moves westward with respect to the target area 121.

For example, the monitoring control device 110 controls the propulsion device 103 during the period during which the artificial satellite 101 stays in the apogee section. Consequently, the period during which the artificial satellite 101 stays in the perigee section is extended.

### *** Description of Examples ***

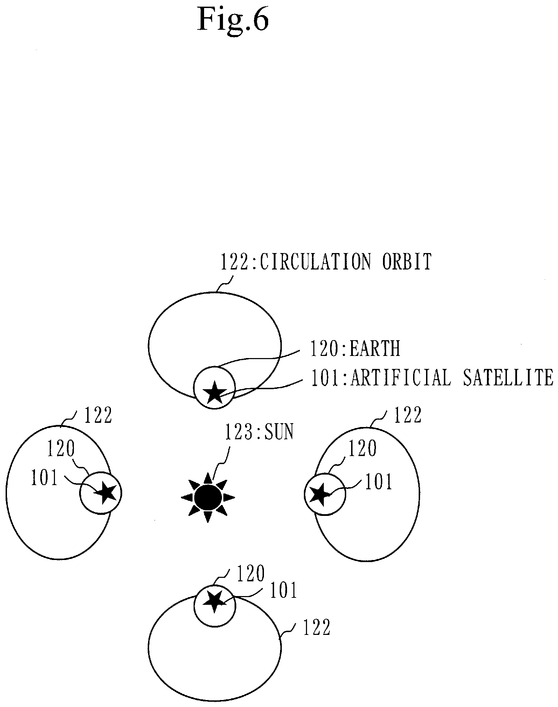

Based on Fig. 6, a relative relationship between the sun 123, the Earth 120, and the circulation orbit 122 along with revolution in one year will be described.

If a condition is satisfied that the target area 121 (see Fig. 2) is in a sunshine state, the latitude of the perigee on the orbit surface is in the vicinity of the latitude of the target area 121, and the artificial satellite 101 passes in the sky above the target area 121, it is possible to monitor under the satisfactory condition.

The orbit surface circles asynchronously with the revolution cycle, and the perigee and the direction of the orbit inclination also change. For this reason, by providing a plurality of artificial satellites 101 corresponding to a plurality of orbit surfaces, one of the artificial satellites 101 takes over the role to a succeeding artificial satellite 101 while monitoring under the satisfactory condition. As a result, always monitoring under the satisfactory condition is realized.

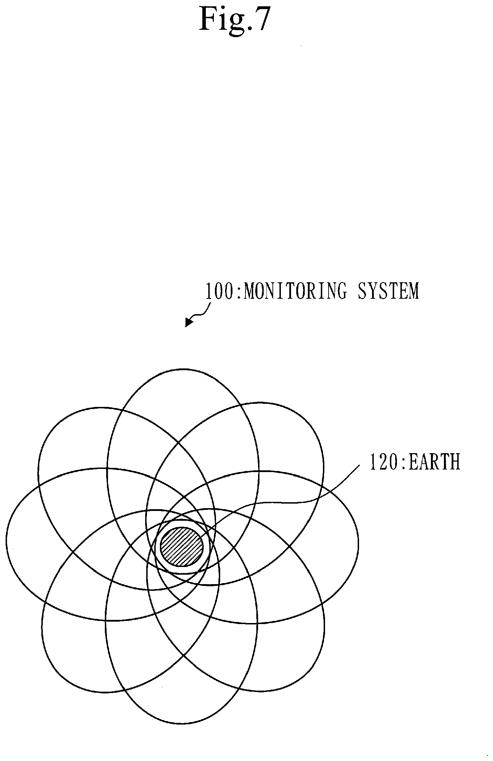

A specific example of an arrangement of the orbit surfaces in the monitoring system 100 will be described with reference to Fig. 7.

Fig. 7 illustrates eight orbit surfaces arranged in the monitoring system 100 from a north-south direction. For example, the monitoring system 100 includes eight artificial satellites 101. Illustration of the artificial satellite 101 is omitted. Eight ellipses surrounding the Earth 120 are equivalent to eight circulation orbits 122 (see Fig. 2 or 6) corresponding to the eight artificial satellites 101.

In the monitoring system 100, the orbit surfaces having a high eccentricity and a high orbit inclination angle in the vicinity of the geostationary orbit are arranged at equal intervals in an east-west direction.

Various types of parameters are set in the monitoring control device 110 of each artificial satellite 101 in such a manner that an effect that at least one of the artificial satellites 101 passes near the target area 121 can be obtained in addition to the acceleration and deceleration effect of the electric propulsion.

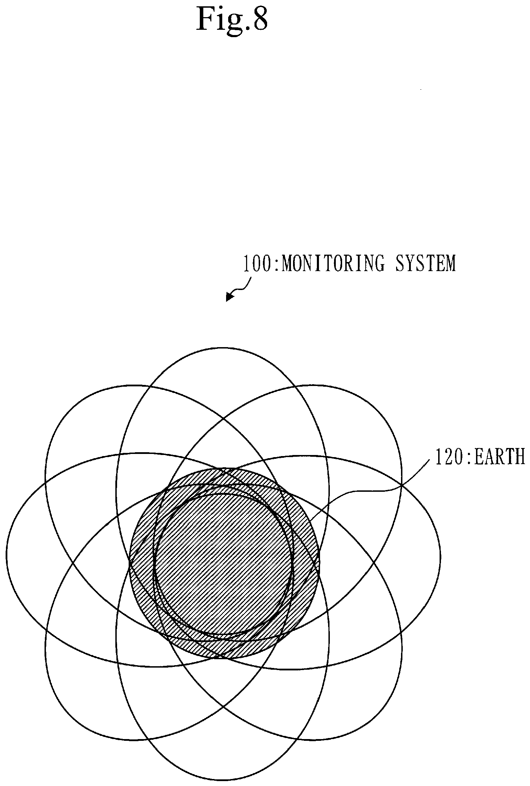

Another specific example of the arrangement of the orbit surfaces in the monitoring system 100 will be described with reference to Fig. 8.

Fig. 8 illustrates eight orbit surfaces arranged in the monitoring system 100 from the south-north direction as with Fig. 7.

In the monitoring system 100, each artificial satellite 101 is an artificial satellite that circulates on a low orbit.

In the monitoring system 100, orbit surfaces having a high eccentricity and a high orbit inclination angle are arranged at equal intervals in the east-west direction.

Various types of parameters are set in the monitoring control device 110 of each artificial satellite 101 in such a manner that an effect that at least one of the artificial satellites 101 passes near the target area 121 can be obtained in addition to the acceleration and deceleration effect of the electric propulsion.

For example, each artificial satellite 101 is a low orbit satellite whose average orbit altitude is about 500 kilometers. The low orbit satellite circulates around the Earth 120 one round in about 100 minutes, and circulates around the Earth 120 about fourteen rounds in a day. In a day, the low orbit satellite flies about four rounds in the vicinity of the target area 121, and in the remaining ten rounds, flies in a place far from the target area 121.

The monitoring control device 110 of the low orbit satellite accelerates or decelerates the low orbit satellite by controlling the electric propulsion of the propulsion device 103. Consequently, a time during which the low orbit satellite stays in the vicinity of the target area 121 is extended. Further, the low orbit satellite passes in a short time in a place except the vicinity of the target area 121. Various types of parameters of the artificial satellite 101 are artificially manipulated in such a manner that the low orbit satellite can fly in this way. As a result, always monitoring by a smaller number of low orbit satellites is realized.

### *** Effect of Fifth Embodiment ***

In the geostationary orbit, one round of the artificial satellite synchronizes with the rotation of the Earth 120. Consequently, a state is maintained where the artificial satellite appears to a specific point on the ground as if the artificial satellite is stationary in the sky above the equator.

On the other hand, the high-eccentricity orbit and the high-inclination orbit are effective for monitoring with high resolution. However, it is difficult to monitor the target area 121 from the zenith at the perigee in a time zone during which a sunshine condition is satisfactory, while synchronizing the circulation of the artificial satellite with the rotation of the Earth 120.

In the fifth embodiment, a constraint condition which is the synchronization with the rotation of the Earth 120 is excluded, and the acceleration and the deceleration by the electric propulsion are flexibly applied. Consequently, the time during which the target area 121 can be monitored under the satisfactory condition by each artificial satellite 101 is extended. Then, by running the plurality of artificial satellites 101 in cooperation with each other, it is possible to always monitor the target area 121 under the satisfactory condition.

In the first embodiment, the artificial satellite 101 is run for a long period of time while maintaining the synchronization with the rotation of the Earth 120 on the average basis, by appropriately combining the acceleration and the deceleration.

After extending the time during which the artificial satellite 101 stays in the sky above the target area 121, if the propulsion device 103 is controlled in such a manner that a stay time is reduced when the artificial satellite 101 passes in a place except the sky above the target area 121, it is possible to construct a system without limiting the number of return days to a day. Specifically, if the artificial satellite 101 is delayed by one round or one round ahead with respect to the rotation of the Earth 120 and the monitoring device 102 resumes monitoring the target area 121, it is possible to construct the system without limiting the number of return days to a day. For example, a Molniya orbit is an orbit in which the number of return days is not limited to a day.

An artificial satellite that circulates around the Earth 120 by free fall due to a physical phenomenon without actively using a propulsion means cannot artificially manipulate a position of the perigee and the satellite position on the orbit surface by a selectable orbit condition. For this reason, it is possible to utilize a service that is not affected by the sunshine condition, such as a communication service, however, it is difficult to utilize a service that is affected by the sunshine condition, such as a monitoring service.

In the fifth embodiment, it is possible to make various types of parameters variable by removing a constraint on the number of return days. Specifically, it is possible to make parameters variable such as the eccentricity of the orbit surface, the orbit inclination angle, the orbit altitude, and the acceleration or the deceleration by the electric propulsion. As a result, options for a parameter set that can reasonably monitor the target area 121 are greatly expanded.

Further, since the circling speed of the orbit surface and the satellite position on the orbit surface are artificially changed by the electric propulsion, the time during which the target area 121 can be monitored under the satisfactory condition is extended. Then, when the plurality of artificial satellites 101 share the monitoring service in a time-division manner, it is possible to configure the monitoring system 100 with a small number of satellites. As a result, a total cost of system construction and system run is reduced.

### Sixth Embodiment.

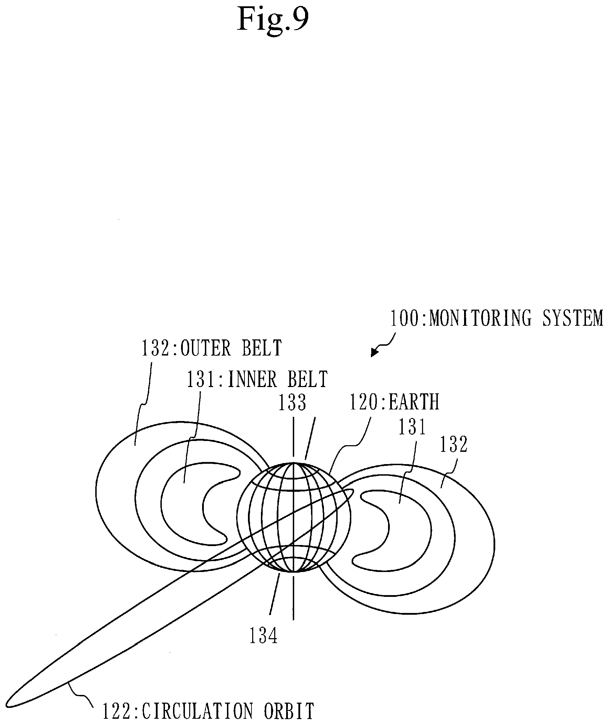

For a mode for reducing malfunction of the monitoring system 100, mainly matters different from the fifth embodiment will be described with reference to Fig. 9.

### *** Description of Configuration ***

Configurations of the monitoring system 100 and the artificial satellite 101 are the same as the configurations in the fifth embodiment.

### *** Description of Operation ***

Operation of the monitoring system 100 is the same as the operation in the fifth embodiment.

### *** Description of Characteristics ***

Characteristics of the monitoring system 100 will be described with reference to Fig. 9.

An inner belt 131 is an inner belt of the Van Allen belt.

An outer belt 132 is an outer belt of the Van Allen belt.

A rotation axis 133 is a circling axis of the Earth 120.

A magnetic axis 134 is a magnetic axis of the Earth 120.

In the circulation orbit 122 of the artificial satellite 101, the perigee is positioned between the Earth 120 and the inner belt 131.

### *** Effect of Sixth Embodiment ***

The Van Allen belt has a two-layer structure consisting of the inner belt 131 and the outer belt 132, and surrounds the Earth 120 by forming a donut shape at 360 degrees. The Van Allen belt is the thickest near the equator and extremely thin near the polar axis. The inner belt 131 is a relatively small belt and is positioned between altitudes of 2,000 kilometers and 5,000 kilometers on the equator. The outer belt 132 is a relatively large belt and is positioned between 10,000 kilometers and 20,000 kilometers on the equator.

The inner belt 131 has many protons, and the outer belt 132 has many electrons. For this reason, if monitoring run is performed in the inner belt 131 or the outer belt 132, there is a risk that equipment of the artificial satellite 101 may malfunction.

In the sixth embodiment, the perigee where the monitoring run is performed is positioned between the Earth 120 and the inner belt 131. Therefore, the risk of the malfunction of the monitoring system 100 is reduced.

### Seventh Embodiment.

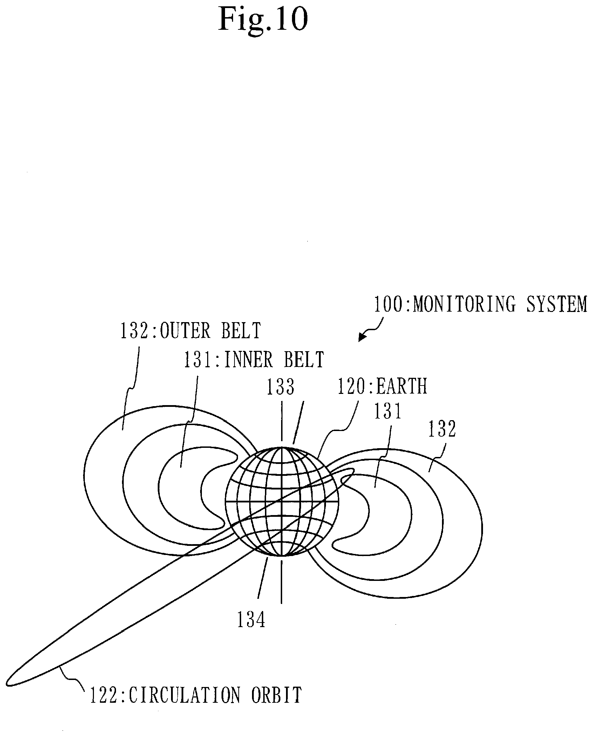

For a mode for reducing the malfunction of the monitoring system 100, mainly matters different from the fifth and sixth embodiments will be described with reference to Fig. 10.

### *** Description of Configuration ***

Configurations of the monitoring system 100 and the artificial satellite 101 are the same as the configurations in the fifth embodiment.

### *** Description of Operation ***

The operation of the monitoring system 100 is the same as the operation in the fifth embodiment.

### *** Description of Characteristics * * *

The characteristics of the monitoring system 100 will be described with reference to Fig. 10.

In the circulation orbit 122 of the artificial satellite 101, the perigee is positioned between the inner belt 131 and the outer belt 132.

### *** Effect of Seventh Embodiment ***

The inner belt 131 has many protons, and the outer belt 132 has many electrons. For this reason, if the monitoring run is performed in the inner belt 131 or the outer belt 132, there is a risk that equipment of the artificial satellite 101 may malfunction.

In the seventh embodiment, the perigee where the monitoring run is performed is positioned between the inner belt 131 and the outer belt 132. Therefore, the risk of the malfunction of the monitoring system 100 is reduced.

### Eighth Embodiment.

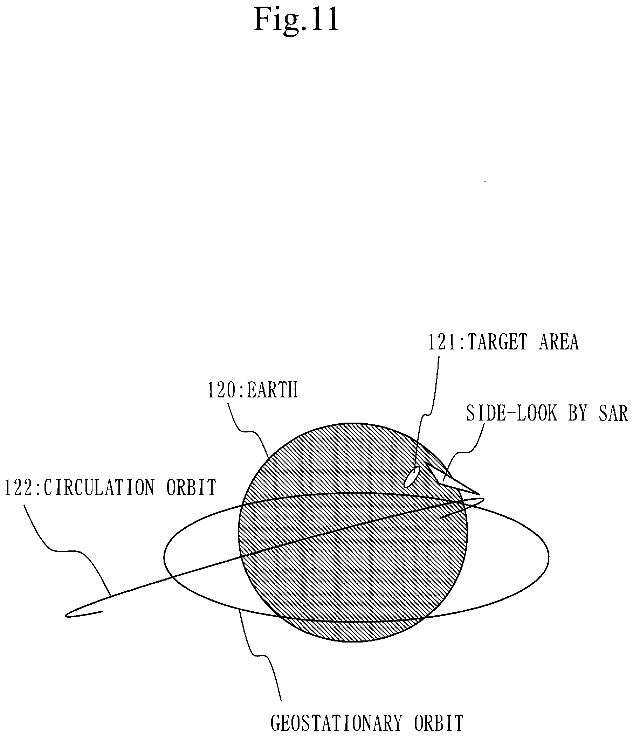

For a mode for expanding a monitoring range, mainly matters different from the embodiments 5 to 7 will be described with reference to Fig. 11.

### *** Description of Configuration ***

Configurations of the monitoring system 100 and the artificial satellite 101 are the same as the configurations in the fifth embodiment.

However, the monitoring device 102 of each artificial satellite 101 is not the visible optical sensor but the synthetic aperture radar (SAR).

### *** Description of Operation ***

Operation of the monitoring system 100 is the same as the operation in the fifth embodiment.

However, the monitoring device 102 (SAR) of each artificial satellite 101 monitors the target area 121 by side-looking (see Fig. 11).

### *** Effect of Eighth Embodiment ***

The synthetic aperture radar performs the side-look inclined in a direction orthogonal to a traveling direction (cross-track direction) of the artificial satellite. Then, a side-look effect of the synthetic aperture radar has an effect of being able to expand the monitoring range from a high latitude to a low latitude.

The synthetic aperture radar can perform the monitoring under all weather conditions and does not have dependency on the sunshine condition. For this reason, the sunshine condition is not a constraint, and it is possible to make a side-look angle of the synthetic aperture radar variable in addition to parameters such as the eccentricity of the orbit surface, the orbit inclination angle, the orbit altitude, and the acceleration and deceleration by the electric propulsion. As a result, it is possible to select a parameter set that enables reasonably monitoring the target area 121 and to construct the monitoring system 100 that enables always monitoring by a small number of artificial satellites 101.

For example, the orbit inclination angle is set to about 20 degrees, and an off-nadiar angle of the synthetic aperture radar is set to be between 20 degrees and 60 degrees. In this case, if the orbit altitude at the perigee is set appropriately, it is possible to monitor the area around Japan positioned at the mid-latitude.

Since the orbit inclination angle is shallower compared to a case where the orbit inclination angle is set to about 35 degrees for viewing directly below by the optical sensor, an effect is obtained that variation of parameter set options is widened and it is easy to monitor under the satisfactory condition.

By operating the propulsion device 103 in such a manner that a propulsive force is generated in a direction orthogonal to the traveling direction of the artificial satellite 101 when the artificial satellite 101 passes an ascending node or a descending node, it is possible to change the orbit inclination angle effectively. In order to maintain the return cycle on an average basis by intentionally speeding up the circling of the orbit surface during N rounds, the injection in an out-of-surface direction is performed in such a manner that the orbit inclination angle gets close to 0 degree at each of the ascending node and the descending node in a first half of the N rounds. After that, in the middle of the N rounds, the injection is performed in the out-of-surface direction at each of the ascending node and the descending node in such a manner that the orbit inclination angle comes back to the original angle. After the orbit inclination angle changes too much, it is satisfactory if the injection in the out-of-surface direction is performed again at each of the ascending node and the descending node in such a manner that the orbit inclination angle comes back to the original angle. That is, it is satisfactory if an injection amount and injection time of the propellant by the propulsion device 103 are optimized in such a manner that the return cycle on an average basis is persistent.

### Ninth Embodiment.

For the monitoring control, mainly matters not described in the first to eighth embodiments will be described.

### *** Description of Configuration ***

Configurations of the monitoring system 100 and the artificial satellite 101 are the same as the configurations in the first to eighth embodiments.

However, the artificial satellite 101 includes a pointing function for directing the monitoring direction to the target area. The pointing function is a function for changing the monitoring direction.

For example, the artificial satellite 101 includes a reaction wheel. The reaction wheel is a device for controlling attitude of the artificial satellite 101. Body pointing is realized by controlling the attitude of the artificial satellite 101 by the reaction wheel.

For example, the monitoring device 102 includes a pointing mechanism. The pointing mechanism is a mechanism for changing a direction to monitor in. For example, a drive mirror or the like is used for the pointing mechanism.

Further, the monitoring device 102 has a resolution variable function and an autofocus function. The resolution variable function is a function for changing the resolution. The autofocus function is a function for adjusting focus.

### *** Description of Operation ***

On a circulation orbit except for the geostationary orbit, that is, an orbit on which the artificial satellite 101 circulates two or more rounds in a day, a relative distance and a relative angle between the target area (for example, Japan) and the artificial satellite 101 change.

Therefore, the monitoring control device 110 directs the monitoring direction of the monitoring device 102 to the target area by controlling the pointing function. Consequently, it is possible to orient the monitoring direction to the target area. Specifically, the circulation orbit of the artificial satellite 101 is an inclined elliptical orbit (an inclined orbit having a high eccentricity) in a sun-synchronization, and the monitoring control device 110 controls the pointing function in such a manner that a visibility condition is satisfied that the target area is made visible for 10 minutes or more.

In addition, the resolution of the optical sensor changes corresponding to a distance to the ground changing.

Therefore, the monitoring control device 110 adjusts the resolution of the monitoring device 102 by controlling the monitoring device 102. Further, the monitoring control device 110 adjusts focus on the target area by controlling the monitoring device 102.

### Tenth Embodiment.

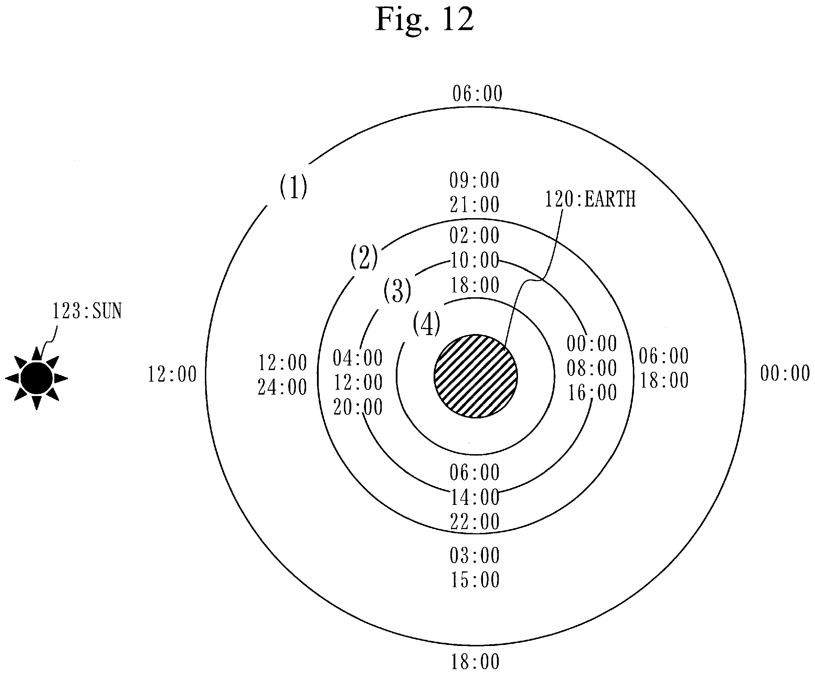

For the artificial satellite 101 circulating on a circular orbit in the sky above the equator, mainly matters not described in the first to ninth embodiments will be described with reference to Figs. 12 to 16.

The artificial satellite 101 circulates on the circular orbit in the sky above the equator.

By controlling the propulsion device 103, the monitoring control device 110 lowers the orbit altitude of the artificial satellite 101 below the altitude of the geostationary orbit (about 36,000 kilometers).

Consequently, while the artificial satellite that circulates on the geostationary orbit circulates one round in a day, the artificial satellite 101 circulates a plurality of rounds in a day.

Examples in which the artificial satellite 101 circulates on the circular orbit in the sky above the equator an integer number of rounds in a day, will be described with reference to Figs. 12 to 16.

A time assigned to each orbit is Japan Standard Time (JST) when the artificial satellite 101 passes.

GSD is an abbreviation for Ground Sampling Distance.

Fig. 12 illustrates an orbit (1) to an orbit (4).

The orbit (1) is a circular orbit (geostationary orbit) whose altitude is about 36,000 kilometers. When the artificial satellite 101 circulates on the orbit (1), the artificial satellite 101 circulates on the orbit (1) one round in about 24 hours. That is, the artificial satellite 101 circulates on the orbit (1) about one round in a day.

The orbit (2) is a circular orbit whose altitude is about 20,000 kilometers. When the artificial satellite 101 circulates on the orbit (2), the artificial satellite 101 circulates on the orbit (2) one round in about 12 hours. That is, the artificial satellite 101 circulates on the orbit (2) two rounds in a day.

The orbit (3) is a circular orbit whose altitude is about 14,000 kilometers. When the artificial satellite 101 circulates on the orbit (3), the artificial satellite 101 circulates on the orbit (3) one round in about 8 hours. That is, the artificial satellite 101 circulates on the orbit (3) three rounds in a day.

The orbit (4) is a circular orbit whose altitude is about 10,000 kilometers. When the artificial satellite 101 circulates on the orbit (4), the artificial satellite 101 circulates on the orbit (4) one round in about 6 hours. That is, the artificial satellite 101 circulates on the orbit (4) four rounds in a day.

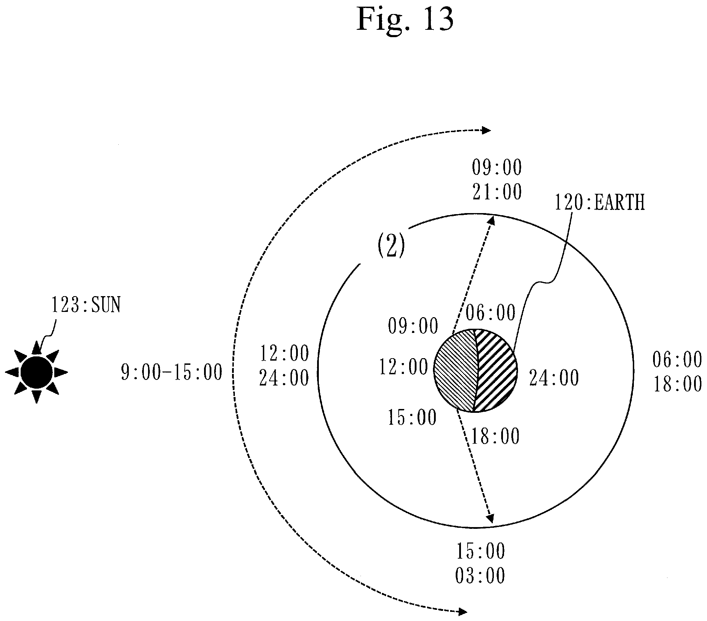

Fig. 13 illustrates the orbit (2).

An altitude of the orbit (2) is about 20,000 kilometers.

The artificial satellite 101 circulates on the orbit (2) one round taking about 12 hours, and circulates on the orbit (2) two rounds in a day.

The monitoring device 102 can perform the continuous monitoring for about 6 hours during a daytime (approximately 09:00 to 15:00 as a guide).

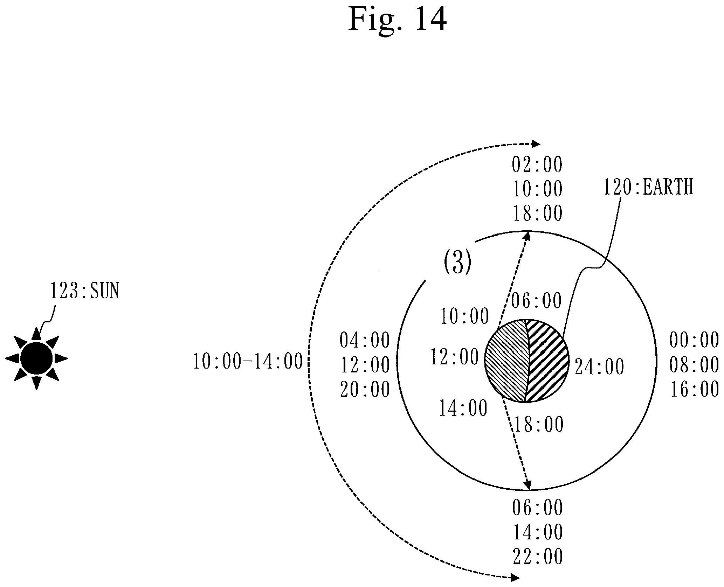

By analogy with the current state of the art, in the future, it is assumed that a telescope whose resolution (GSD) directly below from the geostationary orbit is about 5 meters can be realized (the same in Figs. 14 to 16). Further, it is assumed that the resolution can be improved up to about 3 meters by imaging the same monitoring target a plurality of times and applying the super-resolution technique (the same in Figs. 14 to 16). Then, when converted by an improvement effect of the GSD attributed to a difference in the orbit altitudes, the GSD is about 2.8 meters or more, and the super-resolution is about 1.7 meters or more.

Fig. 14 illustrates the orbit (3).

An altitude of the orbit (3) is about 14,000 kilometers.

The artificial satellite 101 circulates on the orbit (3) one round taking 8 hours and circulates on the orbit (3) three rounds in a day.

The monitoring device 102 can perform the continuous monitoring for about 4 hours during a daytime (approximately 10:00 to 14:00 as a guide).

When converted by the improvement effect of the GSD attributed to the difference in the orbit altitudes, the GSD is about 1.9 meters or more, and the super-resolution is about 1.2 meters or more.

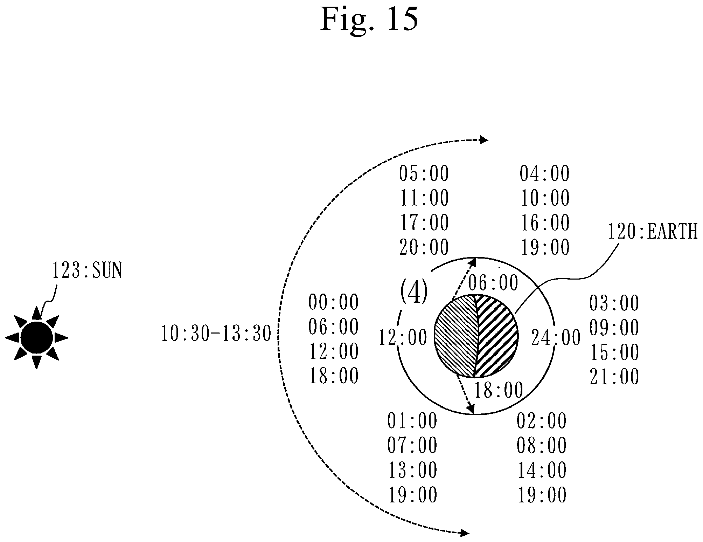

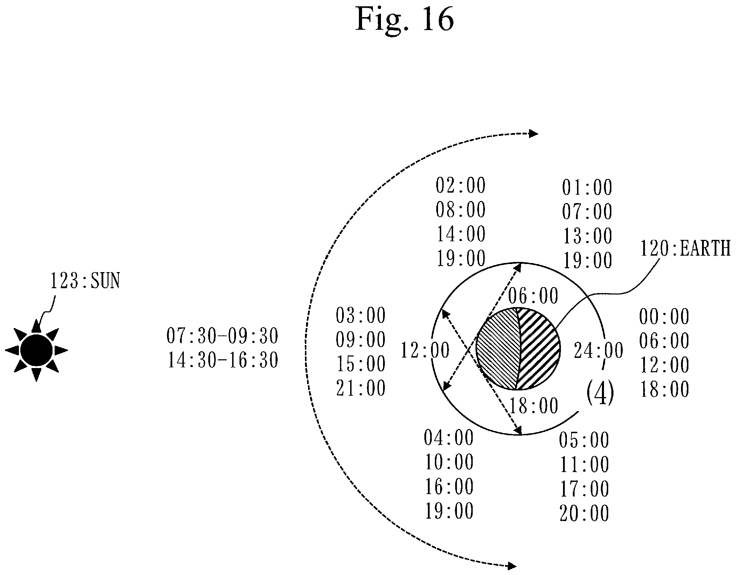

The orbit (4) is illustrated in each of Figs. 15 and 16.

An altitude of the orbit (4) is about 10,000 kilometers.

The artificial satellite 101 circulates on the orbit (4) one round taking about 6 hours, and circulates on the orbit (4) four rounds in about a day.

In Fig. 15, the monitoring device 102 can perform the continuous monitoring for about 3 hours during a daytime (approximately 10:30 to 13:30 as a guide).

When converted by the improvement effect of the GSD attributed to the difference in the orbit altitudes, the GSD is about 1.5 meters or more, and the super-resolution is about 0.9 meters or more.

In Fig. 16, the monitoring device 102 can perform the continuous monitoring for about 2 hours twice during a daytime (approximately 07:30 to 09:30 and 14:30 to 16:30 as a guide).

When converted by the improvement effect of the GSD attributed to the difference in the orbit altitudes, the GSD is about 1.5 meters or more, and the super-resolution is about 0.9 meters or more.

By the artificial satellite 101 circulating an integer number of rounds in a day, the artificial satellite 101 can pass in the sky above the target area 121 at the same time every day. For example, the artificial satellite 101 can pass in the sky above Japan at about 12:00 pm every day.

### Eleventh Embodiment.

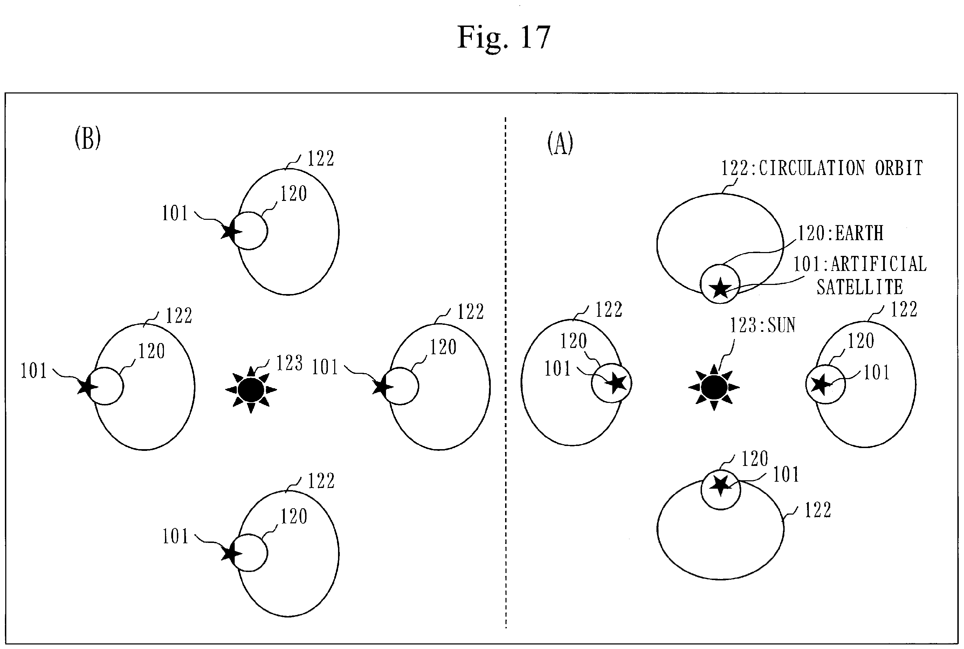

For the artificial satellite 101 circulating on an inclined circular orbit in the sun-synchronization, mainly matters not described in the first to tenth embodiments will be described with reference to Figs. 17 to 25.

The artificial satellite 101 circulates on the sun-synchronous orbit by utilizing an elliptical effect of the Earth. This sun-synchronous orbit is an inclined orbit as well as a circular orbit.

In order to synchronize with the sun, the orbit surface needs to circle one round in one year, and it is realistic to utilize the elliptical effect of the Earth. When utilizing a propulsion system, a huge amount of thrust is required, and the amount of thrust is increased.

When utilizing the elliptic effect of the Earth, the altitude of the orbit needs to be equal to or less than 5,700 kilometers.

The artificial satellite 101 circulates on the sun-synchronous orbit an integer number of rounds in a day. Consequently, it is possible to maintain a condition that the northernmost end of the orbit surface is directly below the sun at about 12:00 pm.

However, even if a relative relationship between the sun and the orbit surface is maintained, a relative relationship between the target area (for example, Japan) and the satellite flight position (phase in the orbit surface) changes.

By using the electric propulsion together, it is possible to adjust the orbit surface and the relative relationship between the target area and the satellite flight position so as to be suitable for monitoring the target area in the northern hemisphere during the daytime.

By controlling the propulsion device 103, the monitoring control device 110 causes the artificial satellite 101 to fly in the sky above the target area during the target time zone.

Fig. 17 illustrates an example of the relative relationship between the sun 123, the Earth 120, and the circulation orbit 122.

The circulation orbit 122 circulates on the sun-synchronous orbit. This sun-synchronous orbit is an inclined orbit and a circular orbit.

In a relative relationship (A), a relationship is maintained in which the northernmost end of the orbit surface is directly below the sun at about 12:00 pm.

In a relative relationship (B), a relationship is not maintained in which the northernmost end of the orbit surface is directly below the sun at about 12:00 pm.

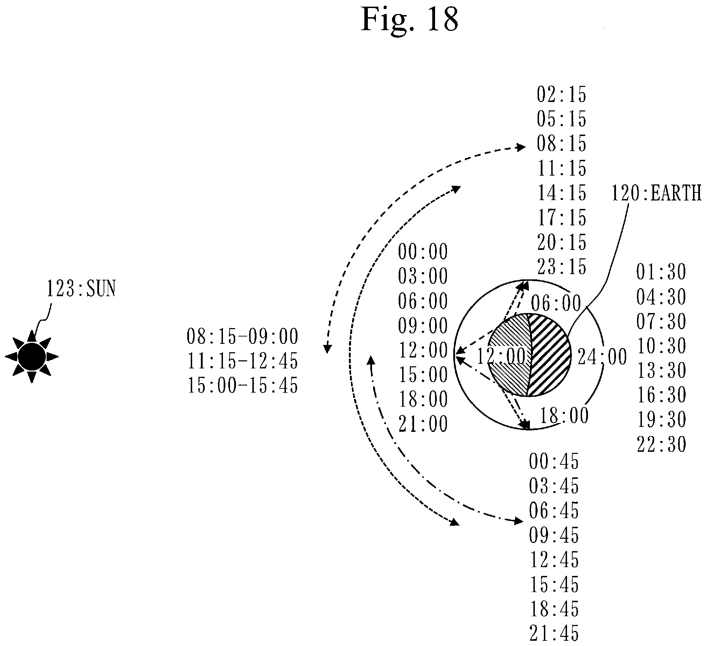

Examples in which the artificial satellite 101 circulates on the sun-synchronous orbit an integer number of rounds in a day will be described with reference to Figs. 18 to 25.

Each sun-synchronous orbit is an inclined orbit and a circular orbit.

A time assigned to each sun-synchronous orbit is Japan Standard Time (JST) when the artificial satellite 101 passes.

Fig. 18 illustrates a sun-synchronous orbit whose revolution cycle is eight rounds in a day.

The artificial satellite 101 circulates on the sun-synchronous orbit one round in about 3 hours. The altitude is about 4,163 kilometers, and the orbit inclination angle is 125 degrees.

The artificial satellite 101 flies in the sky above Japan at about 12:00 pm. Since the altitude is equal to or less than 5,000 kilometers, there is a possibility that the artificial satellite 101 is affected by the Van Allen belt.

The monitoring device 102 can perform continuous monitoring three times during the daytime.

Specifically, the monitoring device 102 can perform the monitoring for approximately, as a guide, a total of 3 hours which are 45 minutes from 08:15 to 09:00, 90 minutes from 11:15 to 12:45, and 45 minutes from 15:00 to 15:45.

An observation range is from 55 degrees north latitude to 55 degrees south latitude.

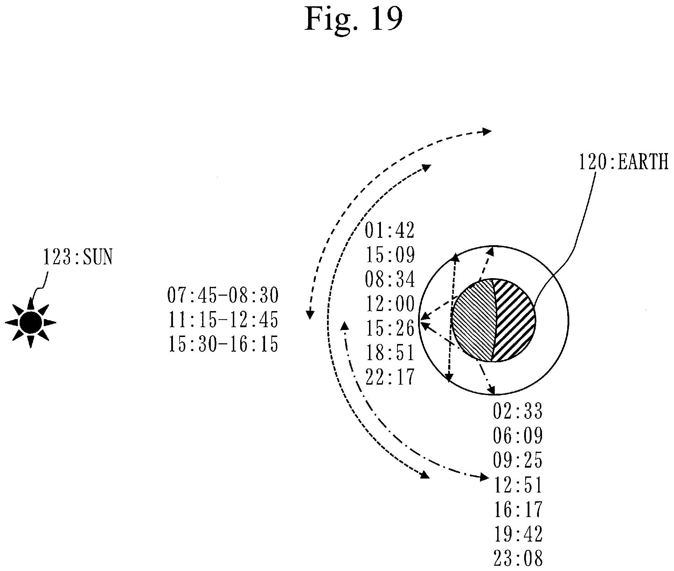

By analogy with the current state of the art, in the future, it is assumed that a telescope whose resolution (GSD) directly below from the geostationary orbit is about 5 meters can be realized (the same in Figs. 19 to 25). Further, it is assumed that the resolution can be improved up to about 3 meters by imaging the same monitoring target a plurality of times and applying the super-resolution technique (the same in Figs. 19 to 25). Then, when converted by the improvement effect of the GSD attributed to the difference in the orbit altitudes, the GSD is about 0.6 meters, and the super-resolution is about 0.35 meters.

Fig. 19 illustrates a sun-synchronous orbit whose revolution cycle is seven rounds in a day.

The artificial satellite 101 circulates on the sun-synchronous orbit one round in about 3.4 hours. The altitude is about 5,144 kilometers, and the orbit inclination angle is 141.6 degrees.

The artificial satellite 101 flies in the sky above Japan at about 12:00 pm. Since the altitude is over 5,000 kilometers, the artificial satellite 101 passes between the inner belt and the outer belt in the Van Allen belt.

The monitoring device 102 can perform the continuous monitoring three times during the daytime.

Specifically, the monitoring device 102 can perform the monitoring for approximately, as a guide, a total of 3 hours which are 45 minutes from 07:45 to 08:30, 90 minutes from 11:15 to 12:45, and 45 minutes from 15:30 to 16:15.

An observation range is a range from 38 degrees north latitude to 38 degrees south latitude.

When converted by the improvement effect of the GSD attributed to the difference in the orbit altitudes, the GSD is about 0.7 meters, and the super-resolution is about 0.4 meters.

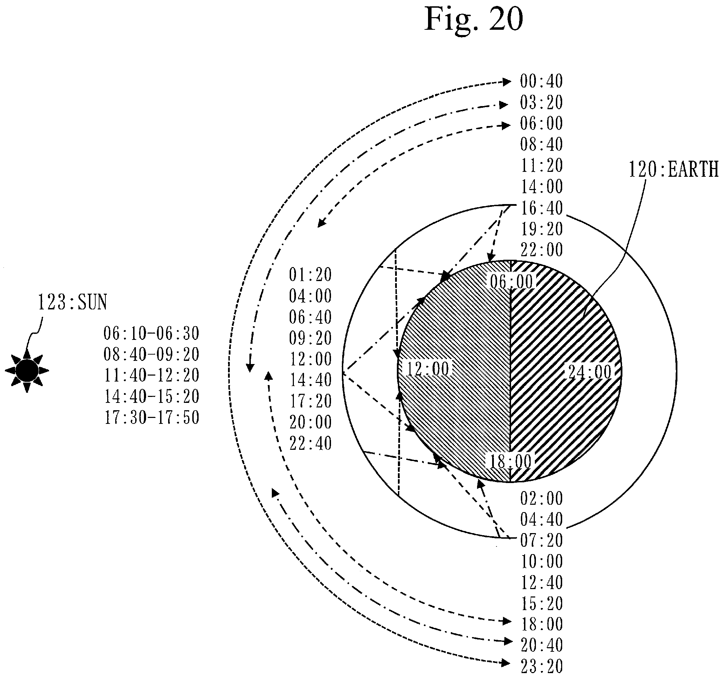

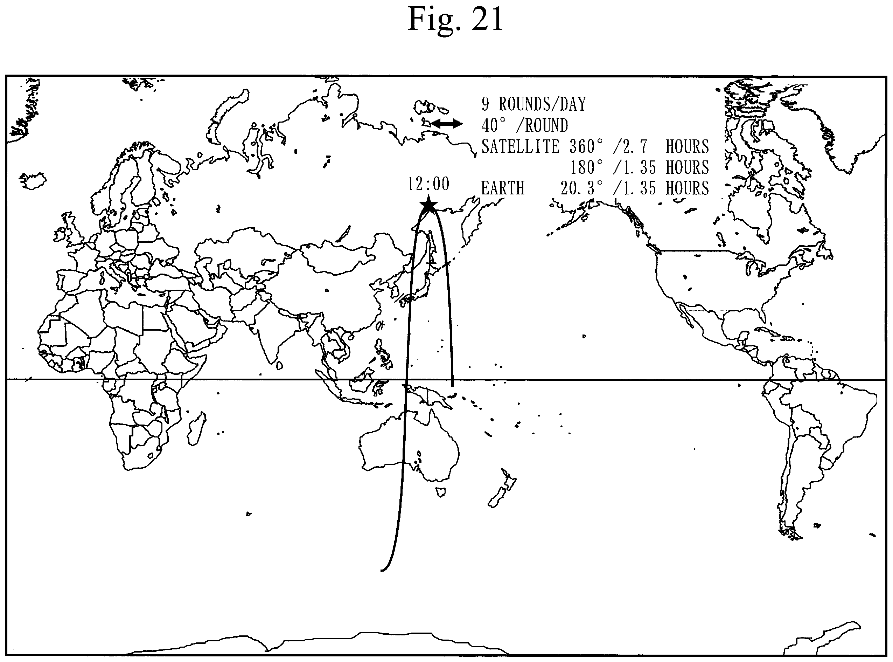

Figs. 20 and 21 illustrate the sun-synchronous orbits whose revolution cycles are nine rounds in a day.

The artificial satellite 101 circulates on the sun-synchronous orbit one round in about 2.7 hours. The altitude is about 3,637 kilometers, and the orbit inclination angle is 116 degrees.

The monitoring device 102 can perform the continuous monitoring five times during the daytime.

Specifically, the monitoring device 102 can perform the monitoring for, as a guide, a total of 2 hours and 40 minutes from the time (1) to the time (5). The time (1) to the time (5) are approximate times as a guide. The time (1) is 20 minutes from 06:10 to 06:30. The time (2) is 40 minutes from 08:40 to 09:20. The time (3) is 40 minutes from 11:40 to 12:20. The time (4) is 40 minutes from 14:40 to 15:20. The time (5) is 20 minutes from 17:30 to 17:50.

The observation range is a range from about 64 degrees north latitude to about 64 degrees south latitude.

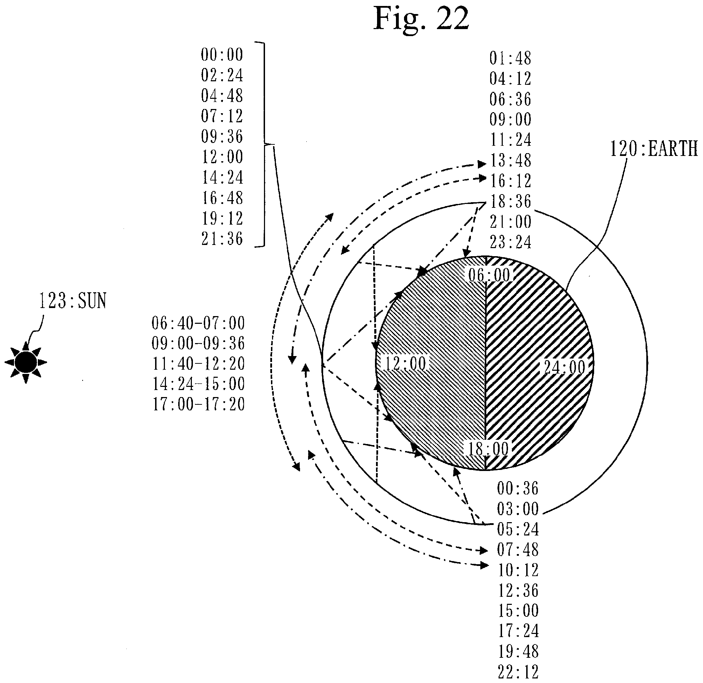

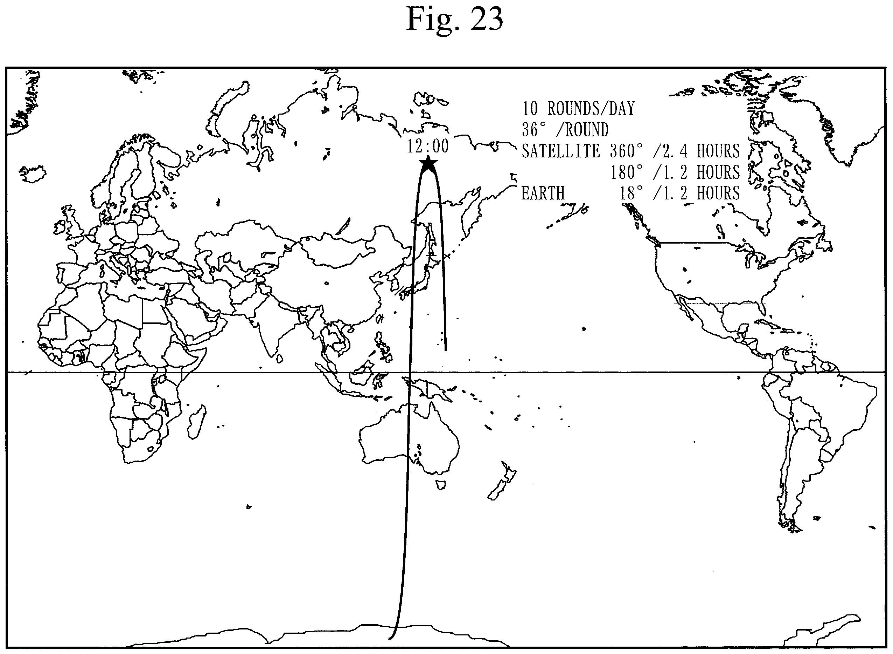

Figs. 22 and 23 illustrate the sun-synchronous orbits whose revolution cycles are 10 rounds in a day.

The artificial satellite 101 circulates on the sun-synchronous orbit one round in about 2.4 hours. The altitude is 2,706 kilometers, and the orbit inclination angle is 110 degrees.

The monitoring device 102 can perform the continuous monitoring five times during the daytime.

Specifically, the monitoring device 102 can perform the monitoring for, as a guide, a total of about 2 hours and 30 minutes from the time (1) to the time (5). The time (1) to the time (5) are approximate times as a guide. The time (1) is 20 minutes from 06:40 to 07:00. The time (2) is about 35 minutes from 09:00 to 09:36. The time (3) is 40 minutes from 11:40 to 12:20. The time (4) is about 35 minutes from 14:24 to 15:00. The time (5) is 20 minutes from 17:00 to 17:20.

The observation range is a range from about 70 degrees north latitude to about 70 degrees south latitude.

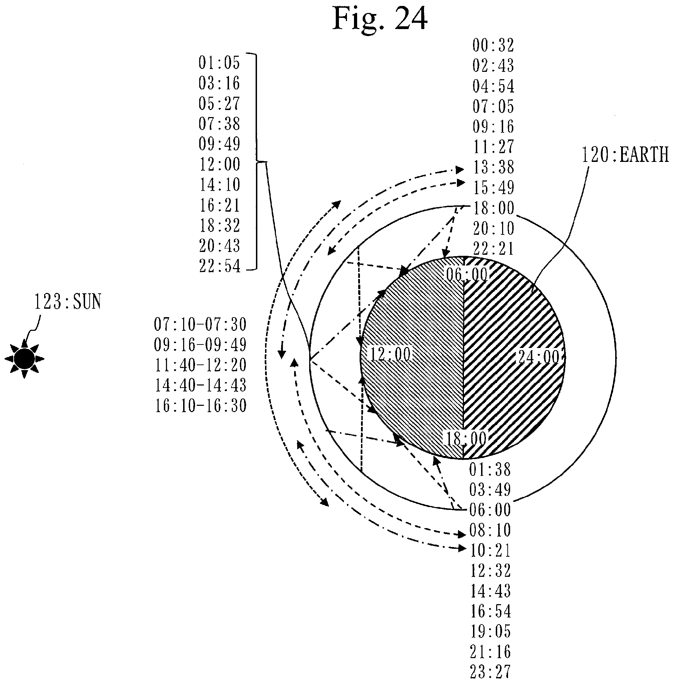

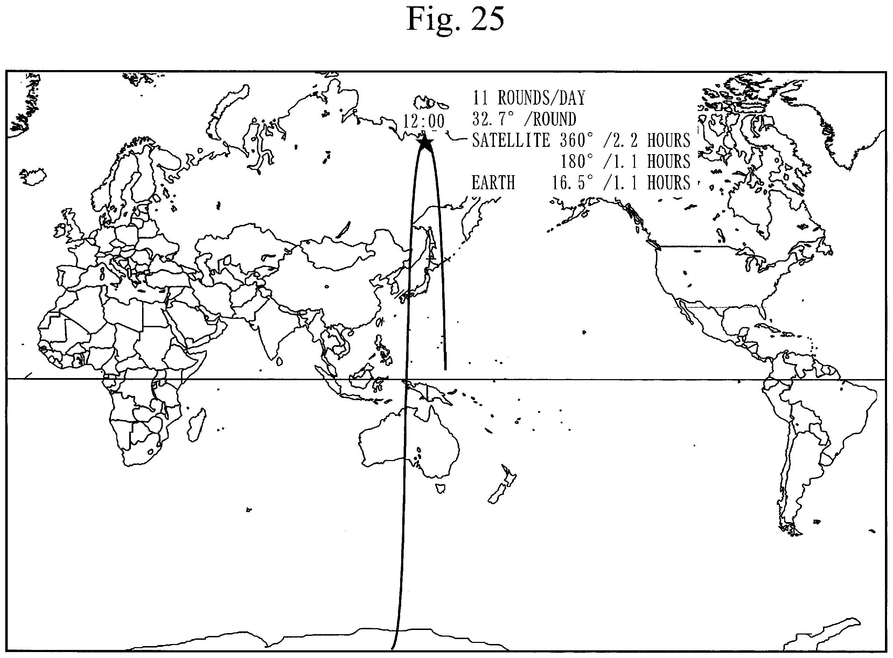

Figs. 24 and 25 illustrate the sun-synchronous orbits whose revolution cycles are eleven rounds in a day.

The artificial satellite 101 circulates on the sun-synchronous orbit one round in about 2.2 hours. The altitude is about 2,146 kilometers, and the orbit inclination angle is 106 degrees.

The monitoring device 102 can perform the continuous monitoring five times during the daytime.

Specifically, the monitoring device 102 can perform the monitoring for, as a guide, a total of about 2 hours and 20 minutes from the time (1) to the time (5). The time (1) to the time (5) are approximate times as a guide. The time (1) is 20 minutes from 07:10 to 07:30. The time (2) is about 30 minutes from 09:16 to 09:49. The time (3) is 40 minutes from 11:40 to 12:20. The time (4) is about 30 minutes from 14:10 to 14:43. The time (5) is 20 minutes from 16:10 to 16:30.

The observation range is a range from about 74 degrees north latitude to about 74 degrees south latitude.

### Twelfth Embodiment.

For the artificial satellite 101 that circulates on an inclination elliptical orbit in the sun-synchronization, mainly matters not described in the first to eleventh embodiments will be described.

The artificial satellite 101 circulates on the sun-synchronous orbit. This sun-synchronous orbit is the inclined orbit as well as the elliptical orbit having a high eccentricity.

Since an elliptical major axis that forms the perigee and the apogee circles in the orbit surface, the direction of the perigee changes even when the sky above Japan is the perigee at a certain moment.

An orbit that stops this circling of the elliptical major axis is referred to as a "frozen orbit". The frozen orbit utilizes asymmetry with respect to an equatorial surface of the Earth.

Therefore, the artificial satellite 101 circulates on the sun-synchronous orbit by utilizing the asymmetry with respect to the equatorial surface of the Earth.

By optimizing the elliptic effect of the Earth and the asymmetry with respect to the equatorial surface of the Earth, it is possible to realize maintaining the relative relationship between the sun and the orbit surface and to realize maintaining the perigee (or apogee) of the northern hemisphere during the daytime.

However, the relative relationship between the target area (for example, Japan) and the satellite flight position (the phase in the orbit surface) changes.

By using the electric propulsion together, it is possible to adjust the orbit surface and a relative relationship between the target area and the satellite flight position so as to be suitable for monitoring the target area in the northern hemisphere during the daytime.

By controlling the propulsion device 103, the monitoring control device 110 causes the artificial satellite 101 to fly in the sky above the target area during the target time zone.

Compared to the elliptical effect of the Earth, the asymmetry with respect to the equatorial surface of the Earth has contribution of about two orders of magnitude less. For this reason, it is possible to realize the frozen orbit by the electric propulsion or the like, in addition to the method of setting the orbit parameter based on the physical phenomenon.

By controlling the propulsion device 103, the monitoring control device 110 causes the artificial satellite 101 to circulate on the frozen orbit. That is, by controlling the propulsion device 103, the monitoring control device 110 suppresses circling of a long axis in the circulation orbit of the artificial satellite 101. For example, the circulation orbit of the artificial satellite 101 has the following attributes. The circulation orbit is an orbit when the perigee is at about 12:00 (an orbit when the northernmost point of the inclined orbit is at about 12:00). The orbit altitude is about 5,100 kilometers. An orbit semi-major axis is about 11,478 kilometers. The eccentricity is about 0.418. The orbit inclination angle is about 121.88 degrees. The apogee altitude is about 9,899 kilometers. The perigee altitude is about 302 kilometers.

The sun-synchronous orbit on which the artificial satellite 101 circulates has the following characteristics.

The sun-synchronous orbit is an inclined orbit having a high eccentricity as well as the frozen orbit.

The orbit altitude is 5,100 kilometers.

The orbit semi-major axis is 11,478 kilometers.

The eccentricity is 0.418.

The orbit inclination angle is 121.88 degrees.

The apogee altitude is 9,898 kilometers.

The perigee altitude is 302 kilometers.

The relative relationship between the target area and the satellite flight position is optimized by tuning of the parameters (the orbit semi-major axis and the orbit inclination angle) or a satellite phase adjustment by the electric propulsion.

### Thirteenth Embodiment.

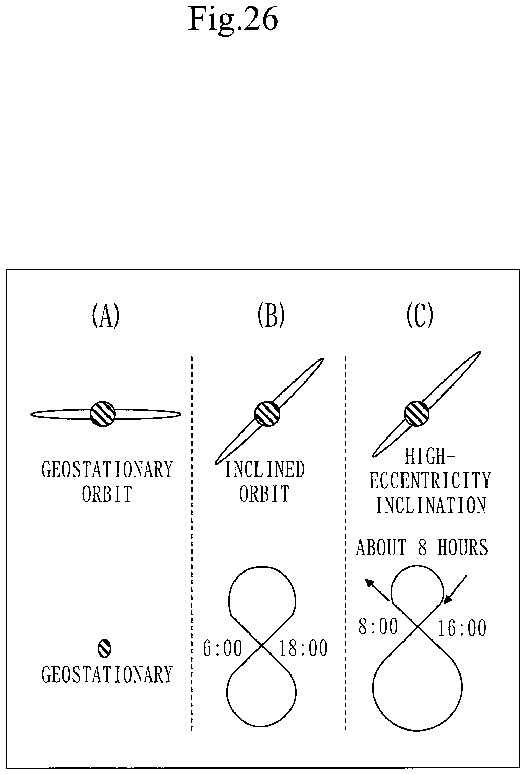

For the various types of sun-synchronous orbits, mainly matters not described in the first to thirteenth embodiments will be described with reference to Figs. 26 to 32.

Fig. 26 illustrates a conventional orbit of a quasi-zenith satellite or the like.

An orbit (A) is the geostationary orbit. The artificial satellite appears to be stationary at a point in the sky above the Earth. The artificial satellite circulates on the orbit (A) about one round in a day. That is, the artificial satellite circulates on the orbit (A) one round in about 24 hours. It is possible to constantly monitor the target area for about 24 hours by one artificial satellite.

By analogy with the current state of the art, in the future, it is assumed that a telescope whose resolution (GSD) directly below from the geostationary orbit is about 5 meters can be realized (the same in Figs. 26 to 32). Further, it is assumed that the resolution can be improved up to about 3 meters by imaging the same monitoring target a plurality of times and applying the super-resolution technique (the same in Figs. 26 to 32). Then, when converted by the improvement effect of the GSD attributed to the difference in the orbit altitudes, the GSD is assumed to be about 5 meters in the geostationary orbit.

An orbit (B) is an inclined orbit whose eccentricity is zero. The artificial satellite appears to be moving on an eight-shape in the sky above the Earth. The artificial satellite circulates on the orbit (B) about one round in a day. That is, the artificial satellite circulates on the orbit (B) one round in about 24 hours. It is possible to constantly monitor the target area for about 12 hours by one artificial satellite.

An orbit (C) is an inclined orbit having a high eccentricity. The artificial satellite appears to be moving on an eight-shape in the sky above the Earth. The artificial satellite circulates on the orbit (C) about one round in a day. That is, the artificial satellite circulates on the orbit (C) one round in about 24 hours. It is possible to constantly monitor the target area for about 8 hours by one artificial satellite. When converted by the improvement effect of the GSD attributed to the difference in the orbit altitudes, the GSD is about 10 meters or less.

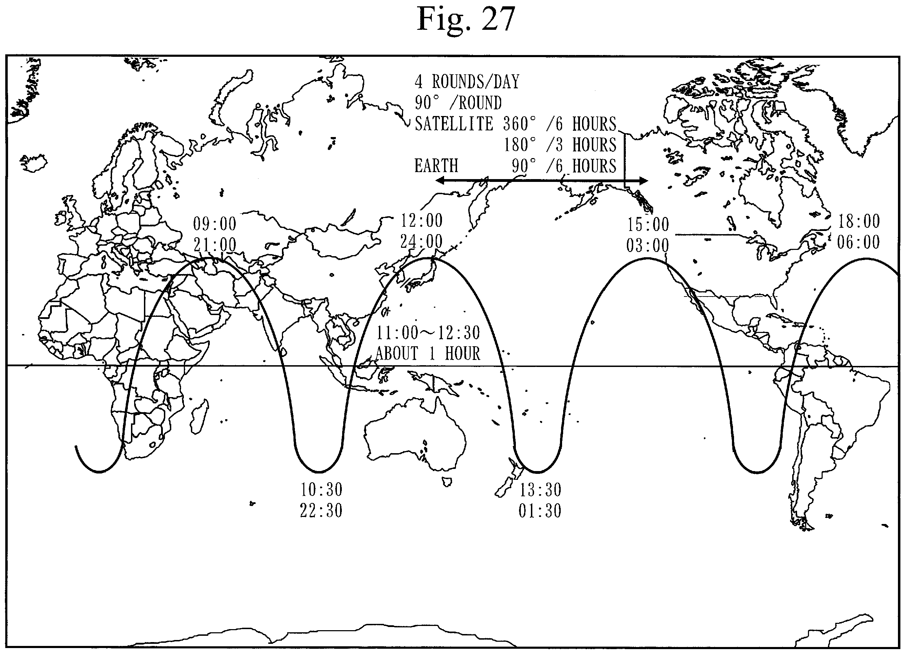

Figs. 27 to 32 illustrate orbits different from a conventional orbit of the quasi-zenith satellite or the like.

Fig. 27 illustrates an example of the sun-synchronous orbit depicted on a map.

The perigee altitude is about 2,000 kilometers, and the apogee altitude is about 19,000 kilometers.

The artificial satellite circulates on this orbit about four rounds in a day. That is, the artificial satellite circulates on this orbit one round in about 6 hours.

When converted by the improvement effect of the GSD attributed to the difference in the orbit altitudes, the GSD is about 0.3 meters, and the super-resolution is about 0.2 meters or more.

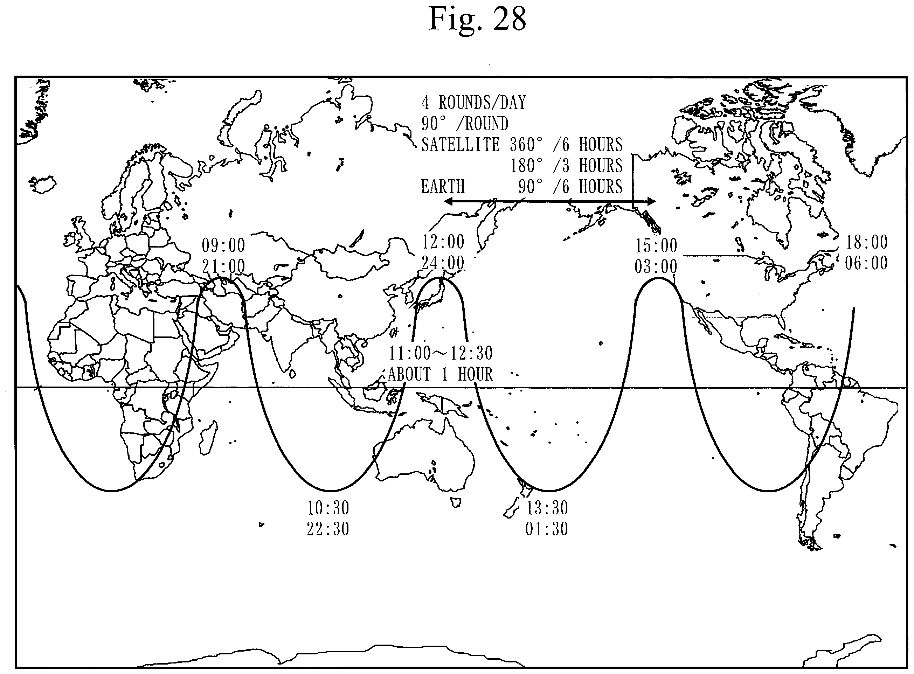

Fig. 28 illustrates an example of the sun-synchronous orbit depicted on a map.

The perigee altitude is about 2,000 kilometers, and the apogee altitude is about 19,000 kilometers.

The artificial satellite circulates on this orbit about four rounds in a day. That is, the artificial satellite circulates on this orbit one round in about 6 hours.

When converted by the altitude difference from the geostationary orbit, the GSD is about 2.6 meters.

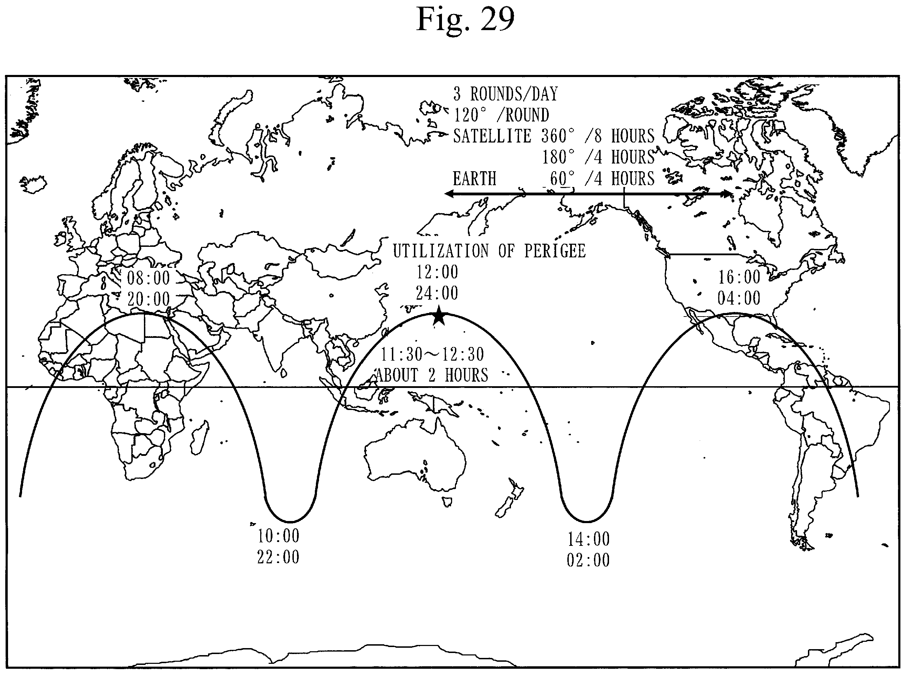

Fig. 29 illustrates an example of the sun-synchronous orbit depicted on a map.

The perigee altitude is about 4,000 kilometers, and the apogee altitude is about 25,000 kilometers.

The artificial satellite circulates on this orbit about three rounds in a day. That is, the artificial satellite circulates on this orbit one round in about 8 hours.

When converted by the altitude difference from the geostationary orbit, the GSD is about 0.6 meters, and the super-resolution is 0.4 meters or more.

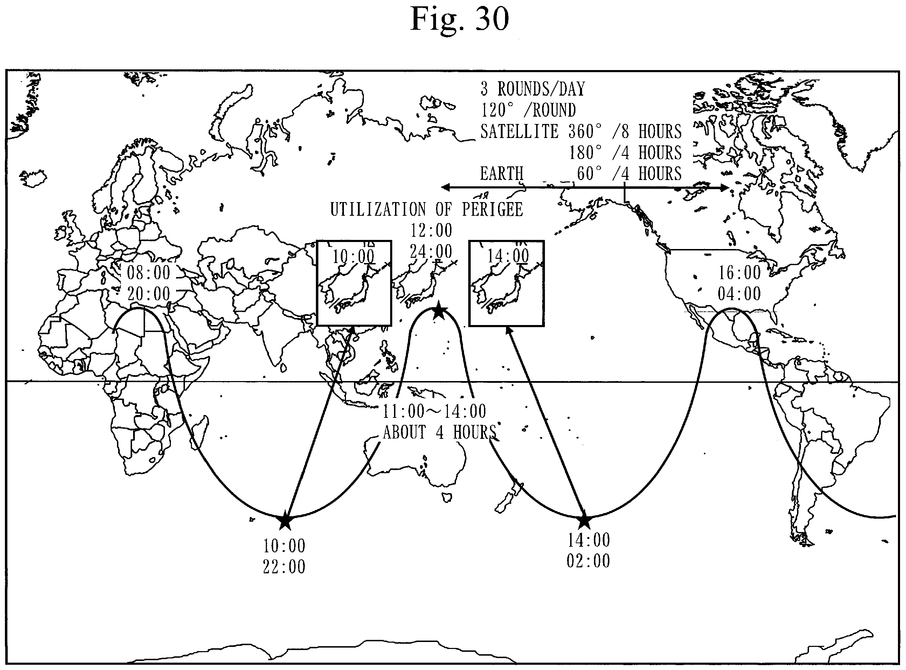

Fig. 30 illustrates an example of the sun-synchronous orbit depicted on a map.

The perigee altitude is about 4,000 kilometers, and the apogee altitude is about 25,000 kilometers.

The artificial satellite circulates on this orbit three rounds in a day. That is, the artificial satellite circulates on this orbit one round in 8 hours.

When converted by the altitude difference from the geostationary orbit, the GSD is about 3.4 meters.

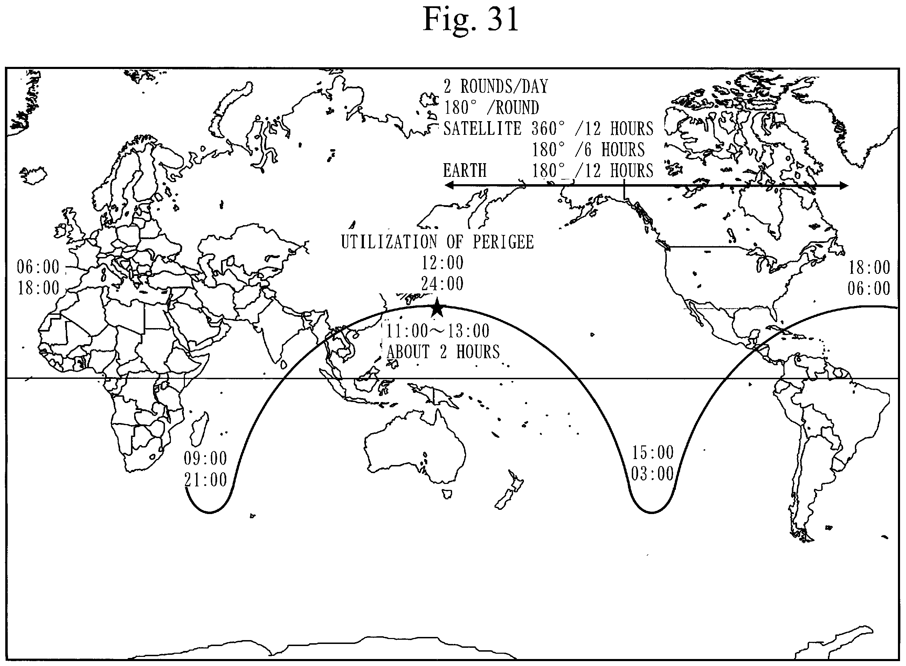

Fig. 31 illustrates an example of the sun-synchronous orbit depicted on a map.

The perigee altitude is about 7,000 kilometers, and the apogee altitude is about 34,000 kilometers.

The artificial satellite circulates on this orbit about two rounds in a day. That is, the artificial satellite circulates on this orbit one round in about 12 hours.

When converted by the altitude difference from the geostationary orbit, the GSD is about 1 meter, and the super-resolution is about 0.6 meters or more.

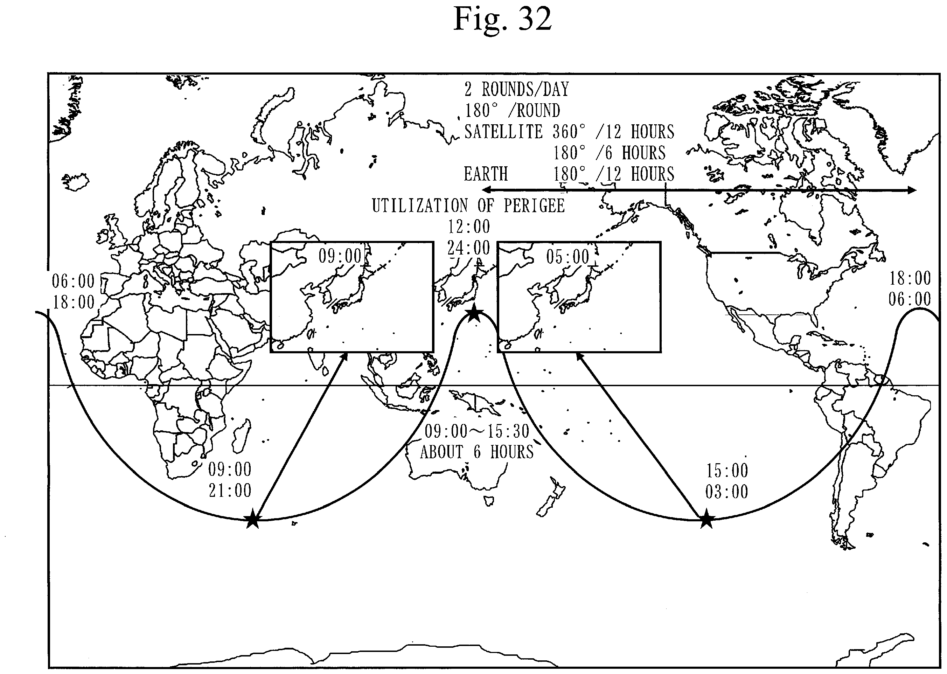

Fig. 32 illustrates an example of the sun-synchronous orbit depicted on a map.

The perigee altitude is about 7,000 kilometers, and the apogee altitude is about 34,000 kilometers.

The artificial satellite circulates on this orbit about two rounds in a day. That is, the artificial satellite circulates on this orbit one round in about 12 hours.

When converted by the altitude difference from the geostationary orbit, the GSD is about 5 meters.

The circulation orbit of the artificial satellite does not have to be the sun-synchronous orbit. That is, the circulation orbit of the artificial satellite may be an inclined orbit having a high eccentricity without being synchronized with the sun.

However, in order for the artificial satellite to fly in the sky above the target area during the daytime, a large thrust comparable to the elliptical effect of the Earth is required. That is, a large amount of propellant is required.

### *** Supplement to Embodiments ***

The embodiments are examples of preferred embodiments and are not intended to limit the technical scope of the invention.

### Reference Signs List

100: monitoring system, 101: artificial satellite, 102: monitoring device, 103: propulsion device, 104: communication device, 105: attitude control device, 106: power supply device, 110: monitoring control device, 111: processing circuitry, 120: Earth, 121: target area, 122: circulation orbit, 123: sun, 131: inner belt, 132: outer belt, 133: rotation axis, 134: magnetic axis.

## Claims

1. An artificial satellite (101) comprising;
a monitoring device (102) to monitor a target area of the Earth;
a propulsion device (103) to change speed of the artificial satellite, and
a monitoring control device (110) to enable monitoring of the target area;
**characterised in that**
the monitoring control device is configured to control the propulsion device to cause the artificial satellite to accelerate and decelerate during each orbit as the artificial satellite circulates around the Earth so as to adjust a relative position of the artificial satellite with respect to the target area (121) in a target time zone while maintaining a circulation cycle of the artificial satellite set to the rotation cycle of the Earth.

2. The artificial satellite of claim 1 wherein
the monitoring control device is configured to lower
an orbit altitude of the artificial satellite in the target time zone by controlling the propulsion device in such a manner that the artificial satellite decelerates before the target time zone, and
wherein as circulation speed of the artificial satellite with respect to rotation speed of the Earth increases due to the orbit altitude lowering, the artificial satellite moves eastward with respect to the target area.

3. The artificial satellite of claim 1 wherein
the monitoring control device is configured to raise
an orbit altitude of the artificial satellite in the target time zone by controlling the propulsion device in such a manner that the artificial satellite accelerates before the target time zone, and
wherein as circulation speed of the artificial satellite with respect to rotation speed of the Earth decreases due to the orbit altitude rising, the artificial satellite moves westward with respect to the target area.

4. The artificial satellite of claim 1 wherein a circulation orbit of the artificial satellite has an eccentricity different from a geostationary orbit, and
wherein the monitoring control device is configured to extend a period during which the artificial satellite stays in a perigee section, by controlling the propulsion device in a period during which the artificial satellite stays in an apogee section.

5. The artificial satellite according to claim 4,
wherein in the circulation orbit of the artificial satellite, a perigee is positioned between the Earth and an inner belt of a Van Allen belt.

6. The artificial satellite according to claim 4,
wherein in the circulation orbit of the artificial satellite, a perigee is positioned between an inner belt of a Van Allen belt and an outer belt of the Van Allen belt.

7. The artificial satellite according to any one of claims 1 to 6,
wherein the circulation orbit of the artificial satellite is an inclined orbit which has an orbit inclination angle of a size corresponding to a latitude of the target area, and
wherein the monitoring control device is configured to move the artificial satellite above the target area in the target time zone by controlling the propulsion device while the artificial satellite circulates around the Earth.

8. The artificial satellite according to any one of claims 1 to 7,
wherein the artificial satellite has a pointing function, and
wherein the monitoring control device is configured to direct a monitoring direction of the monitoring device to the target area by controlling the pointing function.

9. The artificial satellite according to claim 8,
wherein the circulation orbit of the artificial satellite is an inclination elliptical orbit in a sun synchronization, and
wherein the monitoring control device is configured to control the pointing function in such a manner that a visibility condition is satisfied that the target area is made visible for 10 minutes or more.

10. The artificial satellite according to any one of claims 1 to 9,
wherein the monitoring device has a resolution variable function, and
wherein the monitoring control device is configured to adjust resolution of the monitoring device by controlling the monitoring device.

11. The artificial satellite according to any one of claims 1 to 10,
wherein the monitoring device has an autofocus function, and
wherein the monitoring control device is configured to adjust focus on the target area by controlling the monitoring device.

12. The artificial satellite according to any one of claims 1 to 11,
wherein the circulation orbit of the artificial satellite is an inclination elliptical orbit in a sun synchronization, and
wherein the monitoring control device is configured to suppress circling of a long axis of the circulation orbit by controlling the propulsion device.

13. A monitoring system (100) comprising one or more of the artificial satellites according to claims 1 to 12.

## Patentansprüche

1. Künstlicher Satellit (101), der Folgendes umfasst:
eine Überwachungsvorrichtung (102) zum Überwachen eines Zielbereichs der Erde;
eine Antriebsvorrichtung (103) zum Ändern der Geschwindigkeit des künstlichen Satelliten; und
eine Überwachungssteuervorrichtung (110) zum Aktivieren der Überwachung des Zielbereichs;
**dadurch gekennzeichnet, dass** die Überwachungssteuervorrichtung dazu ausgelegt ist, die Antriebsvorrichtung anzusteuern, damit diese ein Beschleunigen und Verlangsamen des künstlichen Satelliten in jeder Umlaufbahn bewirkt, während der künstliche Satellit die Erde umkreist, um
eine relative Position des künstlichen Satelliten in Bezug auf den Zielbereich (121) in einer Zielzeitzone anzupassen, während der Umkreisungszyklus des künstlichen Satelliten auf dem Rotationszyklus der Erde eingestellt bleibt.

2. Künstlicher Satellit nach Anspruch 1, wobei die Überwachungssteuervorrichtung dazu ausgelegt ist, die Umlaufbahnhöhe des künstlichen Satelliten in der Zielzeitzone herabzusetzen, indem die Antriebsvorrichtung so gesteuert wird, dass der künstliche Satellit sich vor der Zielzeitzone verlangsamt, und
wobei, während die Umkreisungsgeschwindigkeit des künstlichen Satelliten in Bezug auf die Rotationsgeschwindigkeit der Erde aufgrund des Herabsetzens der Umlaufbahnhöhe zunimmt, der künstliche Satellit sich in Bezug auf den Zielbereich Richtung Osten bewegt.

3. Künstlicher Satellit nach Anspruch 1, wobei die Überwachungssteuervorrichtung dazu ausgelegt ist, die Umlaufbahnhöhe des künstlichen Satelliten in der Zielzeitzone zu erhöhen, indem die Antriebsvorrichtung so gesteuert wird, dass der künstliche Satellit vor der Zielzeitzone beschleunigt, und
wobei, während die Umkreisungsgeschwindigkeit des künstlichen Satelliten in Bezug auf die Rotationsgeschwindigkeit der Erde aufgrund des Erhöhens der Umlaufbahnhöhe abnimmt, der künstliche Satellit sich in Bezug auf den Zielbereich Richtung Westen bewegt.

4. Künstlicher Satellit nach Anspruch 1, wobei die Umlaufbahn des künstlichen Satelliten eine andere Exzentrizität aufweist als eine geostationäre Umlaufbahn und
wobei die Überwachungssteuervorrichtung dazu ausgelegt ist, einen Zeitraum, in dem der künstliche Satellit in einem Perigäumsabschnitt bleibt, zu verlängern, indem die Antriebsvorrichtung in einem Zeitraum angesteuert wird, in dem der künstliche Satellit in einem Apogäumsabschnitt bleibt.

5. Künstlicher Satellit nach Anspruch 4, wobei in der Umlaufbahn des künstlichen Satelliten ein Perigäum zwischen der Erde und dem inneren Gürtel eines Van-Allen-Gürtels positioniert wird.

6. Künstlicher Satellit nach Anspruch 4, wobei in der Umlaufbahn des künstlichen Satelliten ein Perigäum zwischen dem inneren Gürtel eines Van-Allen-Gürtels und dem äußeren Gürtel des Van-Allen-Gürtels positioniert wird.

7. Künstlicher Satellit nach einem der Ansprüche 1 bis 6,
wobei die Umlaufbahn des künstlichen Satelliten eine geneigte Umlaufbahn ist, die einen Umlaufbahn-Neigungswinkel einer Größe aufweist, die dem Breitengrad des Zielbereichs entspricht, und
wobei die Überwachungssteuervorrichtung dazu ausgelegt ist, den künstlichen Satelliten oberhalb des Zielbereichs in der Zielzeitzone zu bewegen, indem die Antriebsvorrichtung angesteuert wird, während der künstliche Satellit die Erde umkreist.

8. Künstlicher Satellit nach einem der Ansprüche 1 bis 7,
wobei der künstliche Satellit eine Ausrichtungsfunktion aufweist und
wobei die Überwachungssteuervorrichtung dazu ausgelegt ist, eine Überwachungsrichtung der Überwachungsvorrichtung auf den Zielbereich zu richten, indem die Ausrichtungsfunktion angesteuert wird.

9. Künstlicher Satellit nach Anspruch 8,
wobei die Umlaufbahn des künstlichen Satelliten eine geneigte, elliptische Umlaufbahn in Synchronisation mit der Sonne ist und
wobei die Überwachungssteuervorrichtung dazu ausgelegt ist, die Ausrichtungsfunktion so anzusteuern, dass die Sichtbarkeitsbedingung, dass der Zielbereich 10 Minuten lang oder länger sichtbar gemacht wird, erfüllt ist.

10. Künstlicher Satellit nach einem der Ansprüche 1 bis 9,
wobei die Überwachungsvorrichtung eine Funktion mit variabler Auflösung aufweist und
wobei die Überwachungssteuervorrichtung dazu ausgelegt ist, die Auflösung der Überwachungsvorrichtung durch Ansteuern der Überwachungsvorrichtung anzupassen.

11. Künstlicher Satellit nach einem der Ansprüche 1 bis 10,
wobei die Überwachungsvorrichtung eine Autofokusfunktion aufweist und
wobei die Überwachungssteuervorrichtung dazu ausgelegt ist, den Fokus auf den Zielbereich durch Ansteuern der Überwachungsvorrichtung anzupassen.

12. Künstlicher Satellit nach einem der Ansprüche 1 bis 11,
wobei die Umlaufbahn des künstlichen Satelliten eine geneigte, elliptische Umlaufbahn in Synchronisation mit der Sonne ist und
wobei die Überwachungssteuervorrichtung dazu ausgelegt ist, das Kreisen um eine lange Achse der Umlaufbahn durch Ansteuern der Antriebsvorrichtung zu unterdrücken.

13. Überwachungssystem (100), umfassend einen oder mehrere der künstlichen Satelliten nach Anspruch 1 bis 12.

## Revendications

1. Satellite artificiel (101), comprenant :
un dispositif de surveillance (102) pour surveiller une zone cible de la Terre ;
un dispositif de propulsion (103) pour changer la vitesse du satellite artificiel ; et
un dispositif de commande de surveillance (110) pour permettre une surveillance de la zone cible ;
**caractérisé en ce que**
le dispositif de commande de surveillance est configuré pour commander le dispositif de propulsion afin d'amener le satellite artificiel à accélérer et à décélérer pendant chaque orbite lorsque le satellite artificiel circule autour de la Terre de manière à ajuster une position relative du satellite artificiel par rapport à la zone cible (121) dans un fuseau horaire cible tout en maintenant une circulation d'un cycle du satellite artificiel réglé sur le cycle de rotation de la Terre.

2. Satellite artificiel selon la revendication 1, dans lequel
le dispositif de commande de surveillance est configuré pour abaisser une altitude d'orbite du satellite artificiel dans le fuseau horaire cible en commandant le dispositif de propulsion de telle sorte que le satellite artificiel décélère avant le fuseau horaire cible, et
dans lequel lorsque la vitesse de circulation du satellite artificiel par rapport à la vitesse de rotation de la Terre augmente en raison de l'abaissement de l'altitude d'orbite, le satellite artificiel se déplace vers l'est par rapport à la zone cible.

3. Satellite artificiel selon la revendication 1, dans lequel
le dispositif de commande de surveillance est configuré pour élever une altitude d'orbite du satellite artificiel dans le fuseau horaire cible en commandant le dispositif de propulsion de telle sorte que le satellite artificiel accélère avant le fuseau horaire cible, et
dans lequel lorsque la vitesse de circulation du satellite artificiel par rapport à la vitesse de rotation de la Terre diminue en raison de l'élévation de l'altitude d'orbite, le satellite artificiel se déplace vers l'ouest par rapport à la zone cible.

4. Satellite artificiel selon la revendication 1, dans lequel une orbite de circulation du satellite artificiel présente une excentricité différente d'une orbite géostationnaire, et
dans lequel le dispositif de commande de surveillance est configuré pour prolonger une période pendant laquelle le satellite artificiel reste dans une section périgée, en commandant le dispositif de propulsion dans une période pendant laquelle le satellite artificiel reste dans une section apogée.

5. Satellite artificiel selon la revendication 4, dans lequel dans l'orbite de circulation du satellite artificiel, un périgée est positionné entre la Terre et une ceinture intérieure d'une ceinture de Van Allen.

6. Satellite artificiel selon la revendication 4, dans lequel dans l'orbite de circulation du satellite artificiel, un périgée est positionné entre une ceinture interne d'une ceinture de Van Allen et une ceinture externe de la ceinture de Van Allen.

7. Satellite artificiel selon l'une quelconque des revendications 1 à 6,
dans lequel l'orbite de circulation du satellite artificiel est une orbite inclinée qui présente un angle d'inclinaison d'orbite d'une taille correspondant à une latitude de la zone cible, et
dans lequel le dispositif de commande de surveillance est configuré pour déplacer le satellite artificiel au-dessus de la zone cible dans le fuseau horaire cible en commandant le dispositif de propulsion pendant que le satellite artificiel circule autour de la Terre.

8. Satellite artificiel selon l'une quelconque des revendications 1 à 7,
dans lequel le satellite artificiel présente une fonction de pointage, et
dans lequel le dispositif de commande de surveillance est configuré pour diriger une direction de surveillance du dispositif de surveillance vers la zone cible en commandant la fonction de pointage.

9. Satellite artificiel selon la revendication 8,
dans lequel l'orbite de circulation du satellite artificiel est une orbite elliptique d'inclinaison dans une synchronisation solaire, et
dans lequel le dispositif de commande de surveillance est configuré pour commander la fonction de pointage de telle sorte qu'une condition de visibilité soit satisfaite que la zone cible soit rendue visible pendant 10 minutes ou plus.

10. Satellite artificiel selon l'une quelconque des revendications 1 à 9,
dans lequel le dispositif de surveillance présente une fonction de variable de résolution, et
dans lequel le dispositif de commande de surveillance est configuré pour ajuster la résolution du dispositif de surveillance en commandant le dispositif de surveillance.

11. Satellite artificiel selon l'une quelconque des revendications 1 à 10,
dans lequel le dispositif de surveillance présente une fonction de mise au point automatique, et
dans lequel le dispositif de commande de surveillance est configuré pour ajuster la mise au point sur la zone cible en commandant le dispositif de surveillance.

12. Satellite artificiel selon l'une quelconque des revendications 1 à 11,
dans lequel l'orbite de circulation du satellite artificiel est une orbite elliptique d'inclinaison dans une synchronisation solaire, et
dans lequel le dispositif de commande de surveillance est configuré pour supprimer l'encerclement d'un axe long de l'orbite de circulation en commandant le dispositif de propulsion.

13. Système de surveillance (100) comprenant un ou plusieurs des satellites artificiels selon les revendications 1 à 12.
